# EUROPEAN PATENT SPECIFICATION

(11) **EP 4 132 122 B1**
(45) Date of publication and mention of the grant of the patent: **16.10.2024**
(21) Application number: 22744631.7
(22) Date of filing: 26.04.2022
(51) Int. Cl.: H04W 52/02, H04M 1/72466, H04M 1/72463, G06F 9/4401, G06F 9/50, H04M 1/663

(54) **POWER OPTIMIZATION METHOD AND ELECTRONIC DEVICE**
VERFAHREN ZUR LEISTUNGSVERBRAUCHSOPTIMIERUNG UND ELEKTRONISCHE VORRICHTUNG
PROCÉDÉ D'OPTIMISATION DE PUISSANCE ET DISPOSITIF ÉLECTRONIQUE

(30) Priority: 18.06.2021 CN 202110681542
(43) Date of publication of application: 08.02.2023
(73) Proprietor: Honor Device Co., Ltd., Shenzhen, Guangdong 518040 (CN)
(72) Inventor: GU, Qimeng, Shenzhen, Guangdong 518040 (CN); CUI, Zhanbiao, Shenzhen, Guangdong 518040 (CN); ZHAO, Jing, Shenzhen, Guangdong 518040 (CN)
(74) Representative: Isarpatent
(86) International application number: PCT/CN2022/089392
(87) International publication number: WO 2022/262434

(56) References cited:
- WO-A1-2020/093292
- CN-A- 106 020 415
- CN-A- 107 302 789
- CN-A- 108 541 051
- CN-A- 108 566 669
- CN-A- 110 572 866
- CN-A- 111 246 550
- CN-A- 113 747 552
- US-A1- 2019 342 447
- US-A1- 2020 068 066

## Description

Priority is claimed to Chinese Patent Application No. 202110681542.X, filed with the China National Intellectual Property Administration on June 18, 2021 and entitled "POWER CONSUMPTION OPTIMIZATION METHOD AND ELECTRONIC DEVICE",

### TECHNICAL FIELD

This disclosure relates to the field of energy consumption management of electronic devices, and in particular, to a power consumption optimization method.

### BACKGROUND

Many different applications are usually installed on an existing terminal device (for example, a mobile phone), and each application generates many notification messages every day. However, some prompt information (such as vibration, ringing, and waking up a screen and displaying related content) generated by the terminal device in response to these notification messages may disturb a user in some special scenarios (such as lunch break time, sleep time at night, during a meeting, or during a class), which reduces user experience. Therefore, to improve user experience, currently, most terminal devices have a Do Not Disturb mode. A policy of the current Do Not Disturb mode is that the terminal device is muted when receiving a notification message, and when a screen of the terminal device is turned off, the terminal device does not wake up the screen for the notification message. In this way, after the terminal device enables the Do Not Disturb mode, the notification message is prevented from disturbing the user.

Because the terminal device in the Do Not Disturb does not generate prompt information for the notification message, the user generally considers that the policy of the Do Not Disturb mode reduces power consumption. However, currently, in the Do Not Disturb mode, the terminal device still normally performs related processing on all applications, and does not greatly reduce energy consumption. In this way, user experience of the terminal device does not meet an expectation of the user, causing the user to have a sense of gap.

US 2019/342447 A1 relates to an electronic device comprising a display. The device receives one or more communications when the electronic device is in a reduced notification mode. After receiving one or more communications, the device detects an alert condition for the reduced notification mode. In response to detecting the alert condition for the reduced notification mode, the device displays a first-user interface that includes a first affordance. When the first affordance is activated, the reduced notification mode of the electronic device is deactivated. In response to detecting a first input that activates the first affordance, the device deactivates the reduced notification mode and displays a second user interface. The second user interface does not display content from any one of the one or more communications. When the second user interface is displayed, in response to detecting a second input, the device displays notifications that include content for at least some of the one or more communications.

US 2020/068066 A1 relates to an electronic device. The electronic device comprising a one or more processors, and a memory. The memory stores one or more programs configured to be executed using the one or more processors. The one or more programs including instructions for receiving a request to establish a full-duplex live audio communication session between the electronic device and the external device from an external device associated with a contact. Further, the one or more programs including instructions for determining whether the contact is on a list. In response to a determination that the contact is on the list, establishing the full-duplex live audio communication session between the electronic device and the external device. The live audio communication session is established without receiving a user input that acknowledges the request.

### SUMMARY

The object of the present invention is to provide a power consumption optimization method and an electronic device, so that the electronic device reduces power consumption in a Do Not Disturb mode. This object is solved by the attached independent claims, and further embodiments and improvements of the invention are listed in the attached dependent claims. Hereinafter, up to the "brief description of the drawings", expressions like "... aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the claimed invention or its embodiments.

According to a first aspect of the invention, the invention provides a power consumption optimization method, where the method is applied to an electronic device, and a plurality of applications are installed on the electronic device. In the method, the electronic device enables a Do Not Disturb mode in response to a first operation. In the Do Not Disturb mode, the electronic device sets prompt messages of the plurality of applications installed on the electronic device to mute. Then, when the electronic device is in a screen-off state, the electronic device performs power consumption optimization on a target application in the plurality of applications. The power consumption optimization is used to reduce usage of resources in the electronic device by the target application, that is, to reduce power consumption of the electronic device by the target application. The target application is an application outside an application whitelist of the electronic device, an application that performs a preset operation when the electronic device is in the screen-off state, or an application selected by a user in a plurality of applications. The preset operation include at least one of playing audio, recording audio, navigation, or downloading data.

Based on the foregoing technical solution, when the electronic device enters the Do Not Disturb mode and is in the screen-off state, power consumption optimization is performed on a target application that meets a specific condition in the plurality of applications installed on the electronic device. The power consumption optimization reduces usage of resources in the electronic device by the target application, and usage of a smaller quantity of resources in the electronic device by the target application leads to less actions in the electronic device and less power consumption of the electronic device. Therefore, the power consumption optimization can be performed on the target application to reduce power consumption per unit time of the electronic device in the Do Not Disturb mode. Further, when the electronic device enables the Do Not Disturb mode and the electronic device is in the screen-off state, the user can sense reduction of the power consumption per unit time of the electronic device, thereby avoiding a sense of gap caused by the existing Do Not Disturb mode to the user, and improving user experience of the electronic device.

In some not-claimed cases, even if the user enables the Do Not Disturb mode of the electronic device, the electronic device may still be used by the user. In this case, if the electronic device performs power consumption optimization on the target application because the electronic device is in the Do Not Disturb mode, the user cannot use the target application.

Based on this, in the not-claimed solution of this application, the power consumption optimization for the target application by the electronic device not only considers whether the electronic device enables the Do Not Disturb mode, but also considers whether the electronic device is in the screen-off state. The power consumption optimization is performed on the target application only when the electronic device enables the Do Not Disturb mode and is in the screen-off state. In this way, if the user still uses the target application after enabling the Do Not Disturb mode of the electronic device, the electronic device is not in the screen-off state. In this case, the electronic device does not perform power consumption optimization on the target application, which can ensure normal use of the target application, and ensure user experience.

According to the invention, the power consumption optimization includes at least one of the following power consumption optimization items: prohibiting the target application from using a mobile communication network, prohibiting the target application from using Wi-Fi (wireless fidelity, wireless fidelity), prohibiting the target application from using Bluetooth, prohibiting the target application from using a GPS (global positioning system, global positioning system), prohibiting a CPU (central processing unit, central processing unit) from being invoked, enabling a flight mode, a broadcast proxy, suspending wake-up of an alarm clock alarm, alarm alignment, releasing a wake-up lock wakelock, stopping all processes of the target application, a proxy service service, a proxy job job, and converting use of a random access memory (random access memory, operating memory) to use of a read-only memory (read-only memory, read-only memory). In the flight mode, the electronic device disconnects communication between a subscriber identity card SIM card of the electronic device and a base station; the broadcast proxy is used to trigger the electronic device to prohibit the target application from performing inter-application communication with another application; suspending an alarm is used to trigger the electronic device to suspend a periodic wake-up action of the target application; alarm alignment is used to trigger the electronic device to set a wake-up period of the target application to be synchronized with a system wake-up period of the electronic device; releasing a wakelock of the target application is used to trigger the CPU to stop allocating a resource for the target application; the proxy service is used to trigger the electronic device to prevent the target device from using a service; and the proxy job is used to trigger the electronic device to prohibit the target device from using a job.

In this way, when the power consumption optimization is performed on the target application, at least one of the foregoing plurality of power consumption optimization items is specifically performed. However, when all the foregoing power consumption optimization items are executed by the electronic device, the target application cannot run normally, so that usage of resources in the electronic device is reduced, and power consumption of the electronic device is further reduced. Therefore, once the electronic device is in the Do Not Disturb mode and in the screen-off state, executing any one of the foregoing power consumption optimization items for the target application can reduce the power consumption per unit time of the target application. Further, when the electronic device enables the Do Not Disturb mode, the user can feel that the power consumption per unit time of the electronic device decreases, thereby avoiding a sense of gap caused by the existing Do Not Disturb mode to the user, and improving user experience of the electronic device.

According to the invention of the first aspect, an application in the application whitelist is a preconfigured application in the electronic device; or an application in the application whitelist is set by the electronic device in response to a setting operation performed by the user.

The preconfigured default application may be obtained by analyzing actual usage data of a large quantity of users for the applications. The preconfigured default application may be specifically an application that needs to be frequently used by the users in the applications, for example, a social application used by most users. In this way, the target application on which power consumption optimization is finally performed is an application that is not frequently used by the user. This ensures that an application that is frequently used or that needs to be always used by the user can still provide a service for the user even when the electronic device is in the Do Not Disturb mode and in the screen-off state, and can further reduce power consumption of the electronic device in the Do Not Disturb mode. Certainly, in practice, the target application may be set based on another standard, or may be even all the applications installed on the electronic device.

When an application in the application whitelist is set by the electronic device in response to a setting operation performed by the user, it may be that the user sets, in any feasible scenario, some applications that need to be continuously used by the user as applications in the application whitelist. For example, the user may perform the setting by using a control menu (for example, an application management menu or a notification setting menu) of the electronic device for each application when the electronic device is not in the screen-off state, or the user may perform the setting by using a voice instruction, or the like. In this way, a user requirement can be ensured, and different application whitelists and target applications can be determined according to different user requirements, thereby improving user experience.

In another possible design manner of the first aspect, when the electronic device is in the screen-off state, that the electronic device performs power consumption optimization on a target application in the plurality of applications includes: when the electronic device is in the screen-off state and a power consumption optimization function of the electronic device is enabled, performing, by the electronic device, power consumption optimization on the target application; where when the electronic device enables the Do Not Disturb mode, the power consumption optimization function is enabled in response to a turn-on operation performed by the user on a preset switch on a setting interface.

When the electronic device performs power consumption optimization on the target application in the Do Not Disturb mode and in the screen-off state, the target application cannot run normally in this case. However, in some scenarios (for example, the user enables the Do Not Disturb mode of the electronic device during a class, but an application in the electronic device still needs to run normally), the user may not need to perform power consumption optimization on the target application. Therefore, based on the foregoing technical solution, the right to determine whether to perform power consumption optimization on the target application may be handed over to the user, thereby improving user experience.

In another possible design manner of the first aspect, the method further includes: displaying, by the electronic device, a first interface in response to a turn-on operation performed by the user on a preset switch, where the first interface includes optimization options of a plurality of applications; and using, by the electronic device, at least one application as the plurality of target applications in response to a selection operation performed by the user on the optimization option of the at least one application in the optimization options of the plurality of applications.

In this not-claimed way, specific applications (target applications) on which power consumption optimization is to be performed by the electronic device in the Do Not Disturb mode and in the screen-off state may be set by the user in a process of enabling the Do Not Disturb mode. Because this manner is equivalent to giving the user a prompt for setting the target application, user experience can be further improved.

In another possible design manner of the first aspect, the method further includes: displaying, by the electronic device, a second interface in response to a selection operation performed by the user on an optimization option of a first application, where the second interface includes optimization options of a plurality of power consumption optimization items, and the first application is one of the plurality of applications; and using, by the electronic device, at least one power consumption optimization item as a power consumption optimization item of the target application in response to a selection operation performed by the user on the optimization option of the at least one power consumption optimization item in the optimization options of the plurality of power consumption optimization items.

The plurality of power consumption optimization items include: prohibiting the target application from using a mobile communication network, prohibiting the target application from using Wi-Fi, prohibiting the target application from using Bluetooth, prohibiting the target application from using a GPS, prohibiting a CPU from being invoked, enabling a flight mode, a broadcast proxy, suspending an alarm, alarm alignment, releasing a wakelock, stopping all processes of the target application, a proxy service, and a proxy job, and converting use of a RAM to use of a ROM.

In the flight mode, the electronic device disconnects communication between a subscriber identity card SIM card of the electronic device and a base station; the broadcast proxy is used to trigger the electronic device to prohibit the target application from performing inter-application communication with another application; suspending an alarm is used to trigger the electronic device to suspend a periodic wake-up action of the target application; alarm alignment is used to trigger the electronic device to set a wake-up period of the target application to be synchronized with a system wake-up period of the electronic device; releasing a wakelock of the target application is used to trigger the CPU to stop allocating a resource for the target application; and the proxy service is used to trigger the electronic device to prohibit a target device from using a service; and the proxy job is used to trigger the electronic device to prohibit the target device from using a job.

Based on the foregoing not-claimed solution, the user can not only determine the target application in a process of setting the Do Not Disturb mode, but also determine a power consumption optimization item corresponding to each target application after determining the target application. Therefore, when the electronic device is in the Do Not Disturb mode and in the screen-off state subsequently, differentiated power consumption optimization may be performed on each target application according to a user requirement, so as to further meet the user requirement and improve user experience.

In another possible design manner of the first aspect, the method further includes: displaying, by the electronic device, a third interface in response to a selection operation performed by the user on an optimization option of a preset switch, where the third interface includes optimization options of a plurality of power consumption optimization items; and using, by the electronic device, at least one power consumption optimization item as a power consumption optimization item of the target application in response to a selection operation performed by the user on the optimization option of the at least one power consumption optimization item in the optimization options of the plurality of power consumption optimization items.

The plurality of power consumption optimization items include: prohibiting the target application from using a mobile communication network, prohibiting the target application from using Wi-Fi, prohibiting the target application from using Bluetooth, prohibiting the target application from using a GPS, prohibiting a CPU from being invoked, enabling a flight mode, a broadcast proxy, suspending an alarm, alarm alignment, releasing a wakelock, stopping all processes of the target application, a proxy service, and a proxy job, and converting use of a RAM to use of a ROM.

In the flight mode, the electronic device disconnects communication between a subscriber identity card SIM card of the electronic device and a base station; the broadcast proxy is used to trigger the electronic device to prohibit the target application from performing inter-application communication with another application; suspending an alarm is used to trigger the electronic device to suspend a periodic wake-up action of the target application; alarm alignment is used to trigger the electronic device to set a wake-up period of the target application to be synchronized with a system wake-up period of the electronic device; releasing a wakelock of the target application is used to trigger the CPU to stop allocating a resource for the target application; and the proxy service is used to trigger the electronic device to prohibit a target device from using a service; and the proxy job is used to trigger the electronic device to prohibit the target device from using a job.

Based on the foregoing not-claimed solution, the user can determine a specific power consumption optimization item in a process of setting the Do Not Disturb mode. Therefore, when the electronic device is in the Do Not Disturb mode and in the screen-off state subsequently, proper power consumption optimization may be performed on the target application according to a user requirement, so as to further meet the user requirement and improve user experience.

According to a second aspect, this application provides an electronic device, where the electronic device includes a display, a memory, and one or more processors. The display and the memory are coupled to the processor. The memory stores computer program code, the computer program code includes a computer instruction, and when the computer instruction is executed by the processor, the electronic device is enabled to perform the power consumption optimization method according to any one of the first aspect or the possible design manners of the first aspect.

According to a third not-claimed aspect, this application provides an electronic device, where the electronic device includes a display, a memory, and one or more processors. The display and the memory are coupled to the processor. The memory stores computer program code, the computer program code includes a computer instruction, and when the computer instruction is executed by the processor, the electronic device is enabled to perform the following steps: enabling, by the electronic device, a Do Not Disturb mode in response to a first operation, where when the electronic device is in the Do Not Disturb mode, the electronic device sets prompt information of notification messages of the plurality of applications to mute; and when the electronic device is in a screen-off state, performing, by the electronic device, power consumption optimization on a target application in the plurality of applications. The power consumption optimization is used to reduce usage of resources in the electronic device by the target application. The target application includes at least one of the following applications: an application outside an application whitelist of the electronic device, an application that performs a preset operation when the electronic device is in the screen-off state, or an application selected by a user in a plurality of applications. The preset operation includes at least one of playing audio, recording audio, navigation, or downloading data.

In a possible design manner of the third not-claimed aspect, the power consumption optimization includes at least one of the following power consumption optimization items: prohibiting the target application from using a mobile communication network, prohibiting the target application from using Wi-Fi, prohibiting the target application from using Bluetooth, prohibiting the target application from using a GPS, prohibiting a CPU from being invoked, enabling a flight mode, a broadcast proxy, suspending an alarm, alarm alignment, releasing a wakelock, stopping all processes of the target application, a proxy service, a proxy job, and converting use of a RAM to use of a ROM. In the flight mode, the electronic device disconnects communication between a subscriber identity card SIM card of the electronic device and a base station; the broadcast proxy is used to trigger the electronic device to prohibit the target application from performing inter-application communication with another application; suspending an alarm is used to trigger the electronic device to suspend a periodic wake-up action of the target application; alarm alignment is used to trigger the electronic device to set a wake-up period of the target application to be synchronized with a system wake-up period of the electronic device; releasing a wakelock of the target application is used to trigger the CPU to stop allocating a resource for the target application; the proxy service is used to trigger the electronic device to prevent the target device from using a service; and the proxy job is used to trigger the electronic device to prohibit the target device from using a job.

In another possible design manner of the third not-claimed aspect, an application in the application whitelist is a preconfigured default application in the electronic device; or an application in the application whitelist is set by the electronic device in response to a setting operation performed by the user.

In another possible design manner of the third not-claimed aspect, when the computer instruction is executed by the processor, the electronic device is enabled to specifically perform the following steps: when the electronic device is in the screen-off state and a power consumption optimization function of the electronic device is enabled, performing, by the electronic device, power consumption optimization on the target application; where when the electronic device enables the Do Not Disturb mode, the electronic device enables the power consumption optimization function in response to a turn-on operation performed by the user on a preset switch on a setting interface.

In another possible design manner of the third not-claimed aspect, when the computer instruction is executed by the processor, the electronic device is enabled to specifically perform the following steps: displaying, by the electronic device, a first interface in response to a turn-on operation performed by the user on a preset switch, where the first interface includes optimization options of a plurality of applications; and using, by the electronic device, at least one application as the plurality of target applications in response to a selection operation performed by the user on the optimization option of the at least one application in the optimization options of the plurality of applications.

In another possible design manner of the third not-claimed aspect, when the computer instruction is executed by the processor, the electronic device is enabled to specifically perform the following steps: displaying, by the electronic device, a second interface in response to a selection operation performed by the user on an optimization option of a first application, where the second interface includes optimization options of a plurality of power consumption optimization items, and the first application is one of the plurality of applications; and using, by the electronic device, at least one power consumption optimization item as a power consumption optimization item of the target application in response to a selection operation performed by the user on the optimization option of the at least one power consumption optimization item in the optimization options of the plurality of power consumption optimization items.

The plurality of power consumption optimization items include: prohibiting the target application from using a mobile communication network, prohibiting the target application from using Wi-Fi, prohibiting the target application from using Bluetooth, prohibiting the target application from using a GPS, prohibiting a CPU from being invoked, enabling a flight mode, a broadcast proxy, suspending an alarm, alarm alignment, releasing a wakelock, stopping all processes of the target application, a proxy service, and a proxy job, and converting use of a RAM to use of a ROM.

In the flight mode, the electronic device disconnects communication between a subscriber identity card SIM card of the electronic device and a base station; the broadcast proxy is used to trigger the electronic device to prohibit the target application from performing inter-application communication with another application; suspending an alarm is used to trigger the electronic device to suspend a periodic wake-up action of the target application; alarm alignment is used to trigger the electronic device to set a wake-up period of the target application to be synchronized with a system wake-up period of the electronic device; releasing a wakelock of the target application is used to trigger the CPU to stop allocating a resource for the target application; and the proxy service is used to trigger the electronic device to prohibit a target device from using a service; and the proxy job is used to trigger the electronic device to prohibit the target device from using a job.

In another possible design manner of the third not-claimed aspect, when the computer instruction is executed by the processor, the electronic device is enabled to perform the following steps: displaying, by the electronic device, a third interface in response to a selection operation performed by the user on an optimization option of a preset switch, where the third interface includes optimization options of a plurality of power consumption optimization items; and using, by the electronic device, at least one power consumption optimization item as a power consumption optimization item of the target application in response to a selection operation performed by the user on the optimization option of the at least one power consumption optimization item in the optimization options of the plurality of power consumption optimization items.

The plurality of power consumption optimization items include: prohibiting the target application from using a mobile communication network, prohibiting the target application from using Wi-Fi, prohibiting the target application from using Bluetooth, prohibiting the target application from using a GPS, prohibiting a CPU from being invoked, enabling a flight mode, a broadcast proxy, suspending an alarm, alarm alignment, releasing a wakelock, stopping all processes of the target application, a proxy service, and a proxy job, and converting use of a RAM to use of a ROM.

In the flight mode, the electronic device disconnects communication between a subscriber identity card SIM card of the electronic device and a base station; the broadcast proxy is used to trigger the electronic device to prohibit the target application from performing inter-application communication with another application; suspending an alarm is used to trigger the electronic device to suspend a periodic wake-up action of the target application; alarm alignment is used to trigger the electronic device to set a wake-up period of the target application to be synchronized with a system wake-up period of the electronic device; releasing a wakelock of the target application is used to trigger the CPU to stop allocating a resource for the target application; and the proxy service is used to trigger the electronic device to prohibit a target device from using a service; and the proxy job is used to trigger the electronic device to prohibit the target device from using a job.

According to a fourth aspect, this application provides a computer-readable storage medium, where the computer-readable storage medium includes a computer instruction, and when the computer instruction is run on an electronic device, the electronic device is enabled to perform the power consumption optimization method according to any one of the first aspect or the possible design manners of the first aspect.

According to a fifth not-claimed aspect, this application provides a computer program product, where when the computer program product runs on a computer, the computer is enabled to perform the power consumption optimization method according to any one of the first aspect or the possible design manners of the first aspect. The computer may be the foregoing electronic device.

It can be understood that for beneficial effects that can be achieved by the electronic device according to the second aspect or the possible design manners of the second aspect, or the computer storage medium according to the fourth aspect, reference may be made to beneficial effects of any one of the first aspect or the possible design manners of the first aspect, and details are not described herein again.

### BRIEF DESCRIPTION OF DRAWINGS

FIG. 1 is a schematic diagram of a principle of a power consumption optimization method according to an embodiment of this application;
FIG. 2 is a schematic diagram of a hardware structure of an electronic device according to an embodiment of this application;
FIG. 3 is a schematic flowchart of a power consumption optimization method according to an embodiment of this application;
FIG. 4(a)-FIG. 4(c) are a schematic diagram of a scenario in which a Do Not Disturb mode is enabled according to an embodiment of this application;
FIG. 5(a)-FIG. 5(d) are a schematic diagram of another scenario in which a Do Not Disturb mode is enabled according to an embodiment of this application;
FIG. 6(a)-FIG. 6(d) are a schematic diagram of still another scenario in which a Do Not Disturb mode is enabled according to an embodiment of this application;
FIG. 7(a)-FIG. 7(c) are a schematic diagram of a scenario in which an application in an application whitelist is determined according to an embodiment of this application;
FIG. 8 is a schematic flowchart of another power consumption optimization method according to an embodiment of this application;
FIG. 9(a)-FIG. 9(c) are a schematic diagram of a scenario in which a power consumption optimization function is set according to an embodiment of this application;
FIG. 10(a)-FIG. 10(c) are a schematic diagram of a scenario in which a user selects a target application according to an embodiment of this application;
FIG. 11(a) and FIG. 11(b) are a schematic diagram of a scenario in which a power consumption optimization item is selected according to an embodiment of this application;
FIG. 12(a) and FIG. 12(b) are a schematic diagram of another scenario in which power consumption optimization item is selected according to an embodiment of this application; and
FIG. 13 is a schematic diagram of a structure of another electronic device according to an embodiment of this application.

### DESCRIPTION OF EMBODIMENTS

The terms "first" and "second" are used herein for description only, and cannot be understood as indicating or implying relative importance or implicitly indicating the quantity of indicated technical features. Therefore, the features defined with "first" and "second" can explicitly or implicitly include one or more of the features. In the description of embodiments, unless otherwise specified, "a plurality of" means two or more.

First, related technical terms used in this application are described.

A Do Not Disturb mode generally refers to a mode that avoids irrelevant information from affecting an ongoing process, such as mobile phone incoming short message Do Not Disturb, and game Do Not Disturb. The Do Not Disturb mode in this application is specifically a Do Not Disturb mode of the electronic device. After the electronic device enables the Do Not Disturb mode, prompt information of all notification messages such as an incoming call notification, a short message notification, and an application notification is set to mute.

In addition, based on a difference involved in a system of the electronic device, an existing Do Not Disturb mode policy may be that the prompt information of all notification messages such as an incoming call notification, a short message notification, and an application notification is set to mute when the electronic device is in the screen-off state.

Flight mode: The flight mode is also called aviation mode. When a passenger is taking an airplane, the passenger is required to turn off a mobile phone of the passenger or enable the flight mode that comes with the mobile phone to block all communication signals, so as to prevent transmission and reception of mobile phone signals from affecting the flight of the aircraft. With this function, a wireless cellular network can be disconnected and communication between a subscriber identification module (SIM) card of the mobile phone and a base station is also disconnected. In addition, when the mobile phone enables the flight mode, the mobile phone further disables functions such as Wi-Fi and Bluetooth. If a user needs to use the function subsequently, the mobile phone may enable the function again.

Bluetooth: A Bluetooth technology is an open global specification for wireless data and voice communication. The Bluetooth technology is a special short-range wireless technology connection that establishes a communication environment for fixed and mobile devices based on a low-cost short-range wireless connection.

GPS is short for global positioning system. The GPS is a highly accurate radio navigation positioning system based on man-made earth satellites. The GPS provides accurate geographic location, vehicle speed, and accurate time information anywhere in the world and in near-Earth space.

CPU is short for central processing unit. The CPU is mainly used as an operation and control core of a computer system, and is a final execution unit for information processing and program running.

Wakelock: wake-up lock. The wakelock is a lock mechanism. If an application has applied for the wakelock, the CPU cannot release a resource of the application to enter a sleep state, and the CPU is always in a working state. After an application applies for the wakelock, the application can still run even if the user presses a lock screen key to close a screen, such as a music player.

Service: service. The service is an application component that can run for a long time in the background without a user interface. The service can be started by another application component (such as activity). Once the service is started, it will run in the background, even if the component (activity) that starts the services is destroyed. In addition, the component may be bound to a service, so as to interact with the service, or even to perform inter-process communication (IPC, inter-process communication). For example, services can process a network transaction, play music, execute file I/O or interact with a content provider, all of which can be done in the background.

Job: job. The job is a feature or mechanism of an Android system. An application installed on the Android system may trigger a task (for example, start a service) at a specific time point or periodically by using the feature or mechanism, so as to process a specific service by using a job scheduler job scheduler.

RAM: random access memory, which is generally referred to as an operating memory. The RAM is an internal memory that directly exchanges data with the CPU. The RAM can be read and written at a high speed at any time (except when being refreshed), and is usually used as a temporary data storage medium for an operating system or another running program. When the RAM is working, information can be written (stored) or read (extracted) from any specified address at any time.

ROM: read-only memory, which is generally referred to as a read-only memory. The ROM works in a non-destructive read mode, and can only read information that cannot be written. Once the information is written, the information is fixed. Even if the power is cut off, the information is not lost. Therefore, the ROM is also referred to as a fixed memory. Data stored in the ROM is usually written before the ROM is mounted into integrated equipment, and the data can only be read during the working process of the integrated equipment. Unlike the random access memory, the storage content cannot be quickly and conveniently rewritten. The data stored in the ROM is stable, and the stored data does not change after a power failure. In addition, the ROM has a relatively simple structure and is easy to use. Therefore, the ROM is usually used to store various types of fixed programs and data.

To prevent prompt information (such as vibration, ringing, and waking up a screen and displaying related content) of notification messages of an application installed on the terminal device from disturbing the user in some special scenarios (such as lunch break time, sleep time at night, during a meeting, or during a class), currently, the Do Not Disturb mode is set on most terminal devices. A policy of the current Do Not Disturb mode is that the electronic device is muted when receiving the notification message, and the electronic device does not wake up the screen because of the notification message when the screen is off. However, when the electronic device is in the Do Not Disturb mode, prompt information that can be sensed by the user is not generated for the notification message. Therefore, the user usually considers that the policy of the Do Not Disturb mode has a power consumption reduction function. However, currently, in the Do Not Disturb mode, the terminal device still normally performs related processing on all applications, and does not greatly reduce energy consumption. In this way, user experience of the terminal device does not meet an expectation of the user, causing the user to have a sense of gap.

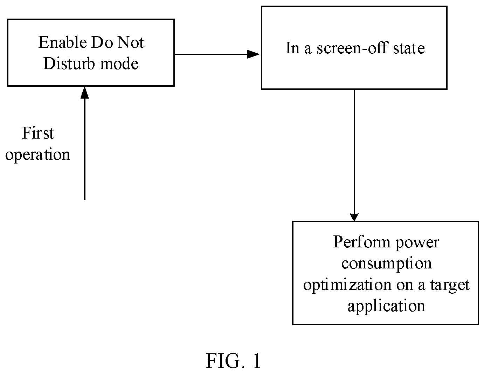

Based on this, this application provides a power consumption optimization method, where the method may be applied to an electronic device, and a plurality of applications are installed on the electronic device. Referring to FIG. 1, the electronic device may enable the Do Not Disturb mode in response to an operation performed by the user. Then, when the electronic device is in the screen-off state, power consumption optimization may be performed on a target application in all the applications installed on the electronic device, so as to reduce power consumption per unit time of the electronic device in the Do Not Disturb mode. Therefore, the power consumption optimization method can be used to reduce a power consumption of the electronic device in a Do Not Disturb mode.

For example, the electronic device in this embodiment of this application may be a mobile phone, a tablet computer, a wearable device (such as a smartwatch or a smart band), an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, or another device on which a plurality of applications are installed. A specific form of the electronic device is not specially limited in this embodiment of this application. In this application, the plurality of applications include applications (for example, applications such as a phone, short messaging, or a setting) delivered with the electronic device, and third-party applications (for example, a social application or a game application) installed by a user when using the electronic device.

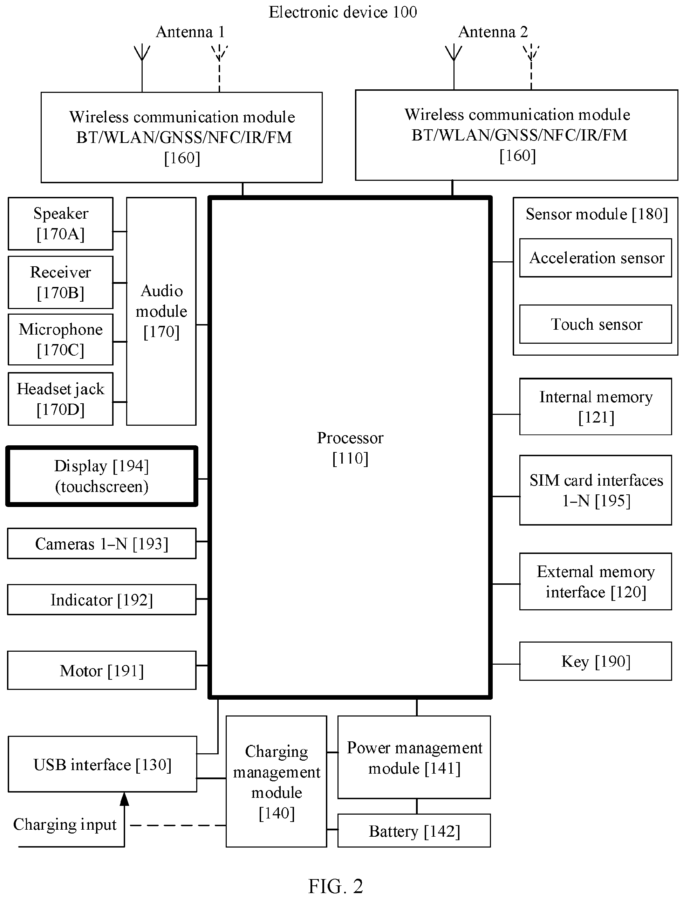

That the electronic device is a mobile phone. Referring to FIG. 2, the electronic device 100 includes a display 194, a one or more processors 110, and an internal memory 121, optionally also an external memory interface 120, a universal serial bus (universal serial bus, USB) interface 130, a charging management module 140, a power management module 141, a battery 142, an antenna 1, an antenna 2, a mobile communication module, a wireless communication module 160, an audio module 170, a speaker 170A, a receiver 170B, a microphone 170C, a headset jack 170D, a sensor module 180, a key 190, a motor 191, an indicator 192, a camera 193, a subscriber identification module (subscriber identification module, SIM) card interface 195, and the like.

The sensor module 180 may include a pressure sensor, a gyro sensor, a barometric pressure sensor, a magnetic sensor, an acceleration sensor, a distance sensor, an optical proximity sensor, a temperature sensor, a touch sensor, an ambient light sensor, a bone conduction sensor, and the like.

It can be understood that the structure illustrated in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), a micro controller unit (micro controller unit, MCU), and/or the like. Different processing units may be independent devices, or may be integrated into one or more processors.

The controller may be a nerve center and a command center of the electronic device 100. The controller may generate an operation control signal based on an instruction operation code and a time sequence signal, so as to control instruction retrieval and instruction execution.

The processor 110 may be further provided with a memory for storing instructions and data. In some embodiments, the memory in the processor 110 is a cache memory. The memory can store an instruction or data that the processor 110 has just used or used cyclically. If the processor 110 needs to use the instruction or data again, the instruction or data can be directly invoked from the memory. Repeated access is avoided, and a waiting time of the processor 110 is reduced, thereby improving system efficiency.

In some embodiments, the processor 110 may include one or more interfaces. The interface may be an inter-integrated circuit (inter-integrated circuit, I2C) interface, a serial peripheral interface (serial peripheral interface, SPI), an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI) interface, a general-purpose input/output (general-purpose input/output, GPIO) interface, a subscriber identity module (subscriber identity module, SIM) interface, a universal serial bus (universal serial bus, USB) interface, and/or the like.

It can be understood that the interface connection relationship between the modules illustrated in the embodiments of the present invention is merely an example for description, and does not constitute a limitation on the structure of the electronic device 100. In some other embodiments of this application, the electronic device 100 may alternatively use an interface connection mode that is different from those in the foregoing embodiments, or use a combination of a plurality of interface connection modes.

The charging management module 140 is configured to receive a charging input from a charger. The power management module 141 is configured to connect the battery 142, the charging management module 140, and the processor 110. The power management module 141 receives an input of the battery 142 and/or an input of the charging management module 140, and supplies power to the processor 110, the internal memory 121, the display 194, the mobile communication module 193, the wireless communication module 160, and the like. In some other embodiments, the power management module 141 and the charging management module 140 may alternatively be disposed in the same device.

The wireless communication function of the electronic device 100 may be implemented by using the antenna 1, the antenna 2, the mobile communication module, the wireless communication module 160, the modem processor, the baseband processor, and the like. The antenna 1 and the antenna 2 are configured to transmit and receive electromagnetic wave signals. Each antenna in the electronic device 100 may be configured to cover one or more communication frequency bands. Different antennas may further be multiplexed to improve antenna utilization. For example, the antenna 1 may be multiplexed into a diversity antenna of a wireless local area network. In some other embodiments, the antenna may be used in combination with a tuning switch.

The mobile communication module can provide a wireless communication solution that is applied to the electronic device 100, including 2G/3G/4G/5G and the like. The wireless communication module 160 may provide a wireless communication solution that is applied to the electronic device 100, including wireless local area network (wireless local area network, WLAN) (such as a Wi-Fi network), Bluetooth (Bluetooth, BT), global navigation satellite system (global navigation satellite system, GNSS), frequency modulation (frequency modulation, FM), NFC, infrared (infrared, IR), and the like.

The electronic device 100 implements a display function by using the GPU, the display 194, the application processor, and the like. The GPU is an image processing microprocessor, which is connected to the display 194 and the application processor. The GPU is configured to perform mathematical and geometric calculations to render graphics. The processor 110 may include one or more GPUs that execute program instructions to generate or change display information.

The display 194 is configured to display an image, a video, and the like. The display may be a touchscreen. In some embodiments, the electronic device 100 may include 1 or N displays 194, where N is a positive integer greater than 1.

The electronic device 100 can implement a photographing function by using the ISP, the camera 193, the video codec, the GPU, the display 194, the application processor, and the like. The ISP is configured to process data fed back by the camera 193. The camera 193 is configured to capture a still image or a video. In some embodiments, the electronic device 100 may include 1 or N cameras 193, and N is a positive integer greater than 1.

The NPU is a neural-network (neural-network, NN) computing processor. By referring to a structure of a biological neural network, such as a transfer mode between human brain neurons, the NPU quickly processes input information, and can further perform continuous self-learning. The NPU can implement applications such as intelligent cognition of the electronic device 100, for example, screen protector recognition, image restoration, image recognition, face recognition, voice recognition, and text understanding.

The external memory interface 120 may be configured to connect to an external memory card such as a Micro SD card, so as to expand a storage capacity of the electronic device 100. The external memory card communicates with the processor 110 by using the external storage interface 120, so as to implement a data storage function. For example, music, video, and other files are stored in the external memory card.

The internal memory 121 may be configured to store computer executable program code, where the executable program code includes an instruction. The processor 110 executes various function applications and data processing of the electronic device 100 by running an instruction stored in the internal memory 121. The internal memory 121 may include a program storage area and a data storage area. The program storage area can store an operating system, an application program required by at least one function (for example, a sound play function or an image play function), or the like. The data storage area can store data (such as audio data or a phone book) created during use of the electronic device 100. In addition, the internal memory 121 may include a high-speed random access memory, and may further include a non-volatile memory, such as at least one magnetic disk storage device, a flash memory device, or a universal flash storage (universal flash storage, UFS).

The electronic device 100 can implement audio functions (such as music playing and sound recording) by using the audio module 170, the speaker 170A, the receiver 170B, the microphone 170C, the headset jack 170D, the application processor, and the like.

The touch sensor is also referred to as a "touch panel (TP)". The touch sensor may be disposed on the display 194, and the touch sensor and the display 194 form a touchscreen, which is also referred to as a "touch-controlled screen". The touch sensor is configured to detect a touch operation performed on or near the touch sensor. The touch sensor can transmit a detected touch operation to the application processor to determine a type of a touch event. The display 194 may be configured to provide a visual output related to the touch operation. In some other embodiments, the touch sensor may alternatively be disposed on a surface of the electronic device 100, which is different from the position of the display 194.

The key 190 includes a power-on key, a volume key, or the like. The motor 191 can generate a vibration prompt. The indicator 192 may be an indicator light, which may be configured to indicate a charging state and a power change, or may be configured to indicate a short message, a missed call, a notification, or the like. The SIM card interface 195 is configured to connect to a SIM card.

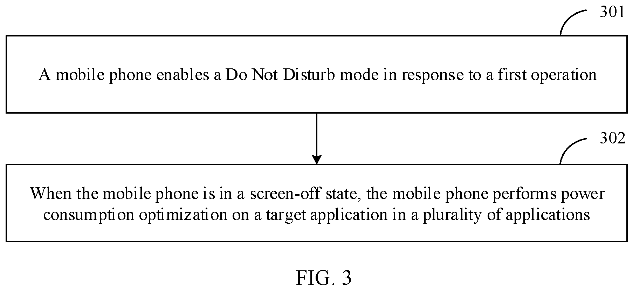

An embodiment of this application provides a power consumption optimization method, and the method is applied to an electronic device on which a plurality of applications are installed. That the electronic device is a mobile phone is used as an example. Referring to FIG. 3, the method may include 301 and 302.

301. The mobile phone enables a Do Not Disturb mode in response to a first operation.

The first operation may be any interactive operation that can enable the Do Not Disturb mode, for example, a touch instruction or a voice instruction. In the Do Not Disturb mode, the electronic device sets the prompt information of notification messages of the plurality of applications installed on the electronic device to mute.

For example, in this embodiment of this application, using an incoming call application as an example, the notification message may be an incoming call notification; using a social application as an example, the notification message may be a new message notification, a version update notification, a buddy addition notification, or the like; and using a video application as an example, the notification may be a member recharging discount notification, a version update notification, a video update notification, or the like. In practice, for all applications on the mobile phone, information that should be known by the user may be used as the notification information, which is not specifically limited in this application.

In this embodiment of this application, a pull-down menu of the mobile phone, a setting menu of the mobile phone, and a related pop-up window that is used to set the Do Not Disturb mode in the mobile phone may all include a related control or option for enabling or disabling the Do Not Disturb mode. The first operation may be a tap operation performed by the user on the related control.

In a first application scenario, that a pull-down menu of the mobile phone includes a control for the Do Not Disturb mode is used as an example. The first operation may include a tap operation performed by the user on the control for the Do Not Disturb mode in the pull-down menu of the mobile phone, and a tap operation on an enabling control that is in a related pop-up window triggered by the tap operation and that is used to enable the Do Not Disturb mode.

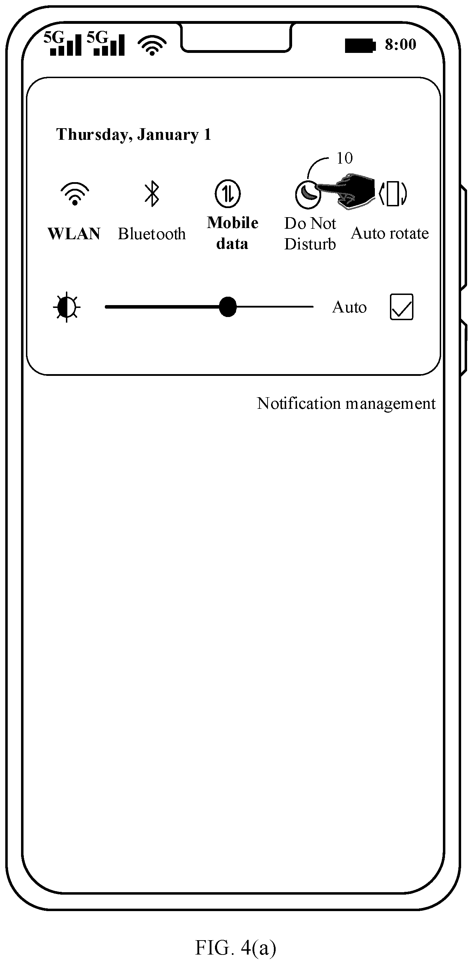

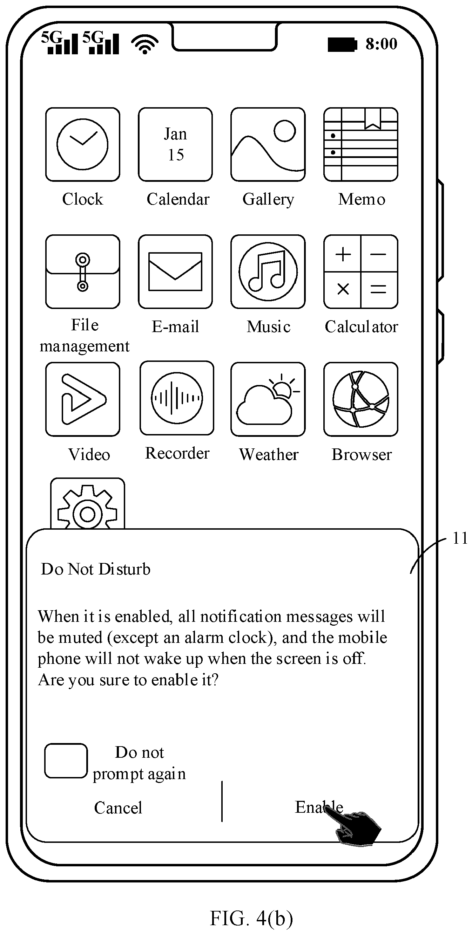

Specifically, the mobile phone may display a pull-down menu shown in FIG. 4(a) in response to a downward sliding operation performed by the user from the top of the touchscreen of the mobile phone. The pull-down menu shown in FIG. 4(a) includes a control 10 for the Do Not Disturb mode. The user can tap the control 10. The mobile phone may display a pop-up window 11 shown in FIG. 4(b) on a main interface in response to the tap operation performed by the user on the control 10. The pop-up window 11 is used to request the user to confirm whether to enable the Do Not Disturb mode, and is further used to prompt the user of a related function of the Do Not Disturb mode. For example, as shown in FIG. 4(b), the pop-up window 11 includes the following prompt information: "After the Do Not Disturb mode is enabled, all notification messages will be muted (except the alarm clock), and the mobile phone in the screen-off state will not wake up. Are you sure to enable the Do Not Disturb mode?" The pop-up window 11 further includes two controls: "Cancel" and "Enable", which are respectively used to determine not to enable the Do Not Disturb mode and to enable the Do Not Disturb mode.

Certainly, the mobile phone may alternatively display the foregoing pop-up window 11 on another interface (for example, an interface of the application that is displayed on the mobile phone before the mobile phone receives the foregoing slide operation) in response to a tap operation performed by the user on the control 10 for the Do Not Disturb mode. Details are not described in this embodiment of this application.

The mobile phone may enable the Do Not Disturb mode in response to the tap operation performed by the user on the "Enable" control shown in FIG. 4(b).

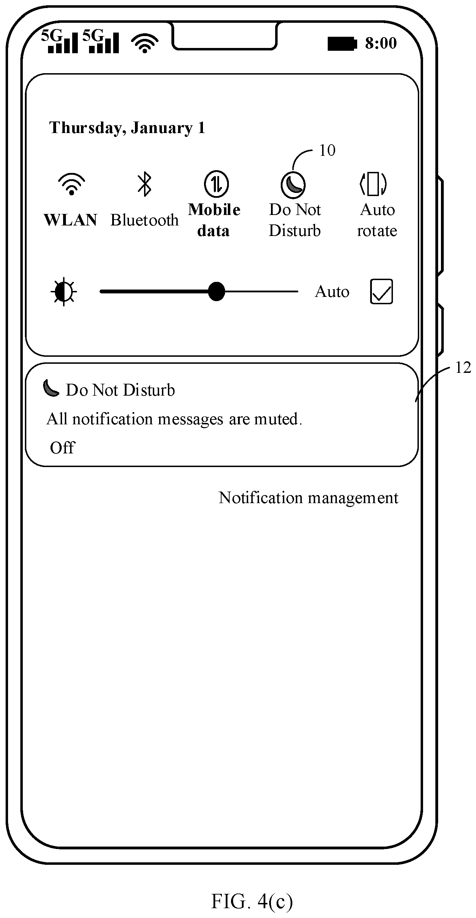

In addition, to enable the user to know that the Do Not Disturb mode is enabled currently, the mobile phone may further display a prompt, in the pull-down menu, that the Do Not Disturb mode is enabled. For example, as shown in FIG. 4(c), the mobile phone may display a Do Not Disturb prompt box 12 in the pull-down menu. The Do Not Disturb prompt box 12 includes an icon (crescent moon) of the Do Not Disturb mode and the words "Do Not Disturb", and further includes prompt information "All notification messages are muted".

In this embodiment of this application, the notification messages of the applications include not only notification messages (an incoming call notification, a short message prompt, and the like) of applications (a phone, short messaging, and the like) delivered with a mobile phone, but also include notification messages (for example, a new message prompt of WeChat^{®}) of third-party applications installed by the user on the mobile phone. Certainly, the foregoing operation procedure and display manner may be actually any other feasible operation procedure and display manner. This is not specifically limited in this application.

In a second application scenario, that a setting menu of the mobile phone includes an option of the Do Not Disturb mode (that is, a subsequent "Do Not Disturb" option) is used as an example, and the first operation may be a related operation performed by the user on the Do Not Disturb setting option in the setting menu of the mobile phone.

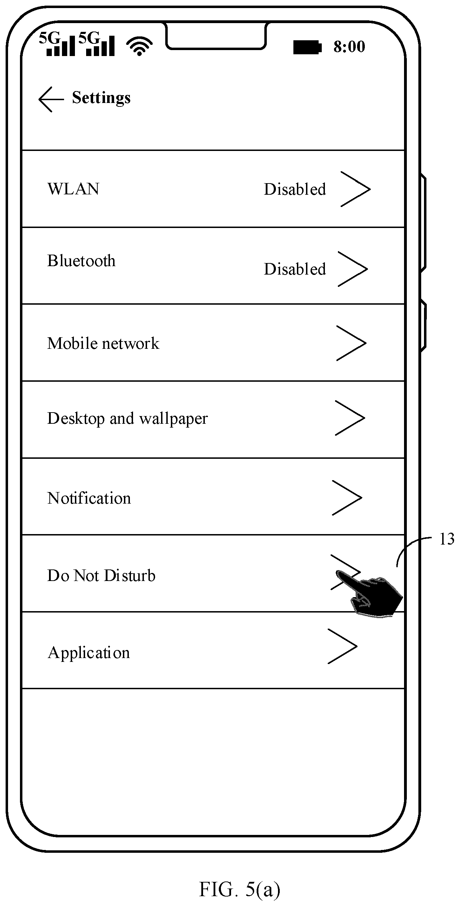

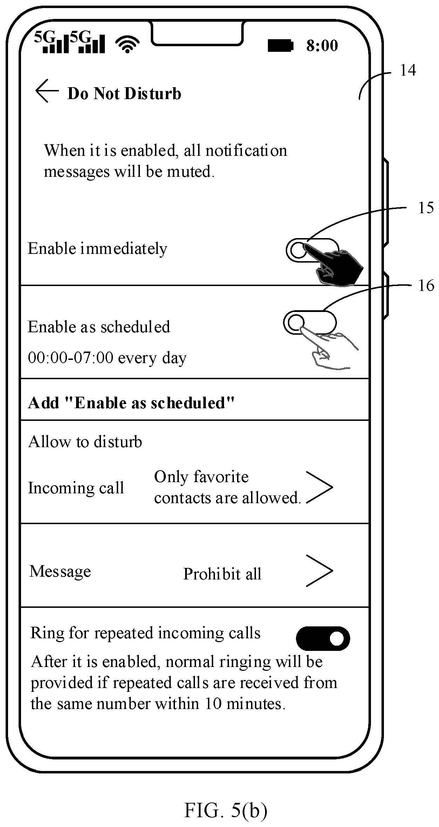

Specifically, referring to FIG. 5(a), the "Do Not Disturb" option 13 is displayed in the setting menu of the mobile phone. The mobile phone may display the "Do Not Disturb" setting interface 14 shown in FIG. 5(b) in response to a tap operation performed by the user on the "Do Not Disturb" option 13. As shown in FIG. 5(b), the Do Not Disturb setting interface 14 includes two setting controls: a first control 15 corresponding to the words "Enable immediately" and a second control 16 corresponding to the words "Enable as scheduled". The mobile phone disables the Do Not Disturb mode by default, that is, the sliders of the first control 15 and the second control 16 shown in FIG. 5(b) are both on the left side.

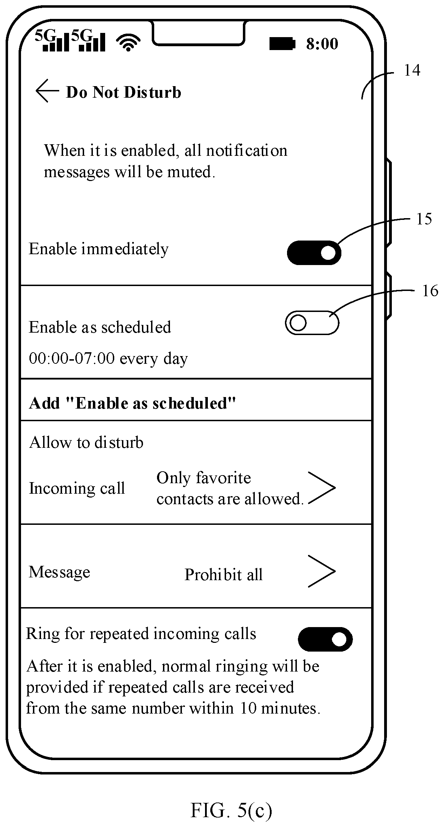

In a feasible manner, the mobile phone may display an interface shown in FIG. 5(c) in response to a tap operation performed by the user on the first control 15. On this interface, the slider of the first control 15 has been moved to the right side, and the left area of the first control 15 is in a predetermined color (for example, blue). In this case, the mobile phone may enable the Do Not Disturb mode in response to the tap operation performed by the user on the first control 15 shown in FIG. 5(b).

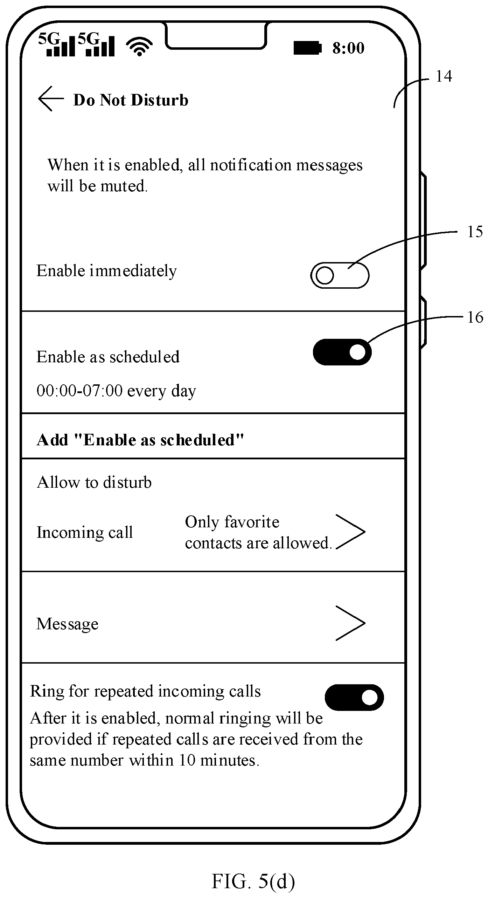

In another feasible manner, the mobile phone may display an interface shown in FIG. 5(d) in response to a tap operation performed by the user on the second control 16. On this interface, the slider of the second control 16 has been moved to the right side, and the left area of the second control 16 is in a predetermined color (for example, blue). In this case, the mobile phone may enable the Do Not Disturb mode in a time period (for example, "00:00-07:00" shown in FIG. 5(d)) corresponding to the second control 16 in response to a tap operation performed by the user on the second control 16 shown in FIG. 5(b).

In the second application scenario, the first operation may specifically include the foregoing tap operation performed on the "Do Not Disturb" option 13 and the tap operation performed on the first control 15/the second control 16. In addition, the mobile phone may further receive a tap operation performed by the user on the foregoing words "Enable as scheduled", and display a related interface for the user to set a time period for enabling the Do Not Disturb mode.

In addition, it should be noted that enabling of the Do Not Disturb mode in the foregoing first application scenario is equivalent to enabling of the Do Not Disturb mode by the mobile phone in the second application scenario in response to the tap operation performed by the user on the first control 15, and the Do Not Disturb mode enabled in the two manners keeps the mobile phone always in the Do Not Disturb mode. To enable the Do Not Disturb mode in a fixed period, the second control 16 exists in the second application scenario for selection by the user. In the first application scenario, the mobile phone may display the interface shown in FIG. 5(c) in response to a tap operation performed by the user on the Do Not Disturb prompt box 12 in the pull-down menu (as shown in FIG. 4(c)) of the mobile phone, and then the mobile phone may set, in response to a related operation performed by the user on the second control 16, a time period for enabling the Do Not Disturb mode.

In a third application scenario, the first operation may be a voice instruction that is used by the user to instruct the mobile phone to enable the Do Not Disturb mode.

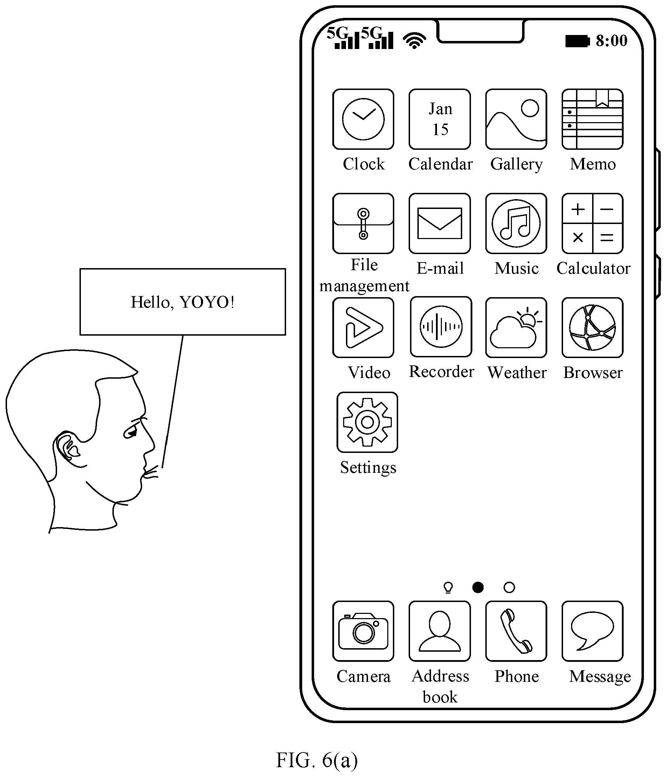

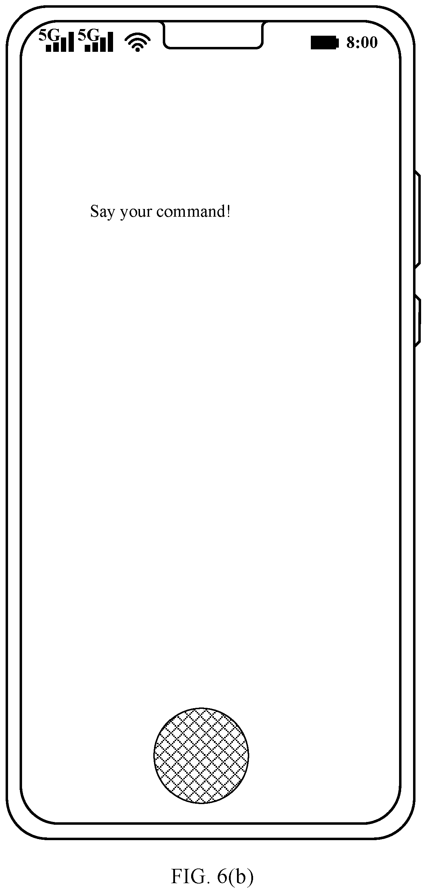

Specifically, as shown in FIG. 6(a), the mobile phone may first receive, by using a microphone of the mobile phone, a smart assistant wake-up instruction that is spoken by the user, for example, "Hello, YOYO!" Then, in response to the smart assistant wake-up instruction, the mobile phone may display the smart assistant interface shown in FIG. 6(b).

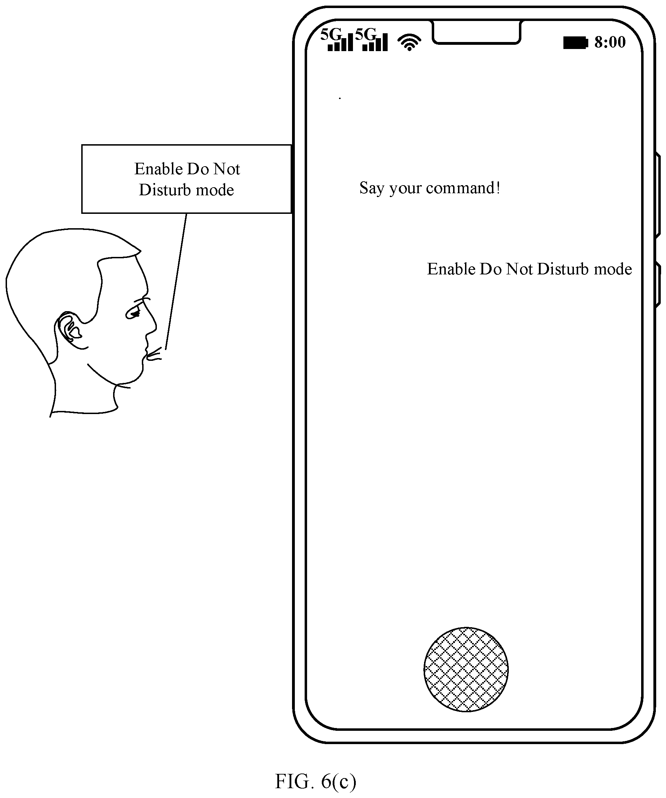

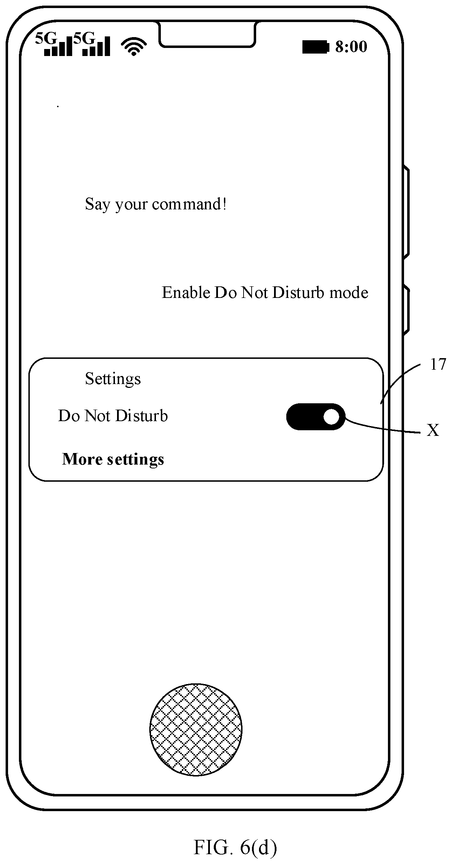

Then, as shown in FIG. 6(c), the smart assistant of the mobile phone invokes the microphone of the mobile phone to obtain and recognize the next voice instruction of the user, for example, "Enable Do Not Disturb mode", and displays the next voice instruction on the smart assistant interface. Finally, as shown in FIG. 6(d), the mobile phone may display, on the smart assistant interface in response to the voice instruction "Enable Do Not Disturb mode" of the user, a pop-up window 17 that is used to indicate a result of enabling the Do Not Disturb mode. The pop-up window may include the words "Do Not Disturb" and a corresponding option control X, and the slider of the option control is set to the right side to indicate that the Do Not Disturb mode is enabled.

Certainly, in practice, the wake-up instruction of the voice assistant may be determined based on a design of different mobile phones, and the voice instruction entered/spoken by the user may also be any voice instruction that can indicate that the Do Not Disturb mode is enabled. Certainly, if the user needs to enable the Do Not Disturb mode in a fixed period (for example, 9:00-10:00 every day), in an implementation, the foregoing "Enable Do Not Disturb mode" may be changed to "Enable the Do Not Disturb mode from nine o'clock to ten o'clock every day". In another implementation, the mobile phone may display the interface shown in FIG. 5(c) in response to a tap operation performed by the user on "More settings" in the pop-up window 17, and then the mobile phone may set, in response to a related operation performed by the user on the second control 16, a time period for enabling the Do Not Disturb mode.

Certainly, in practice, there are other feasible scenarios in which the Do Not Disturb mode is enabled. The foregoing three scenarios are merely examples, and are not intended to be specific limitations to this embodiment of this application.

302. When the mobile phone is in the screen-off state, the mobile phone performs power consumption optimization on a target application in the plurality of applications.

After the Do Not Disturb mode is enabled on the mobile phone, if the mobile phone is in the screen-off state, power consumption optimization may be performed on the target application in the plurality of applications.

It should be noted that, when the Do Not Disturb mode is enabled, in the existing Do Not Disturb policy, the prompt information of the notification message is muted, and when the mobile phone is in the screen-off state, the screen will not be turned on after the notification information is received. It can be learned that, in the existing Do Not Disturb mode, when the user needs to be prompted of a notification message, no sound or vibration is given, and the screen is not turned on. Therefore, energy consumption of the mobile phone is also reduced to a certain extent, and this is also a feasible manner of power consumption optimization. However, in this embodiment of this application, power consumption optimization is an optimization policy added based on the existing Do Not Disturb policy. Therefore, power consumption optimization mentioned in this application does not include a power consumption optimization action (for example, muting, or a screen-off indicator light) in the existing Do Not Disturb policy.

For some mobile phones that can wake up the screen to display a time or display an unlock interface (an interface used to receive an unlock operation performed by a user) in a lock screen state, when the user wakes up the screen to display the time or display the unlock interface, the user may trigger incorrectly or needs to view the time, may need to use some available applications (such as a camera and sound recording) in the unlock state, or may need to unlock the screen and start to use another application. Therefore, in this embodiment of this application, the screen-on state may refer to a state in which a normal interface is displayed after the screen-on state of the mobile phone is released, or may refer to that the user triggers the mobile phone in the screen-off state to turn on the screen to display the time, or may refer to that the user triggers the mobile phone to display the unlock interface. Specifically, this depends on an actual design requirement, and this is not specifically limited in this application. If the screen-on state refers to a state in which a normal interface is displayed after the screen-on state of the mobile phone is released, better power consumption optimization effects may be achieved. If the screen-on state refers to that the user triggers the mobile phone to display the unlock interface, the user will have more application experience.

The power consumption optimization is used to reduce usage of resources in the mobile phone by the target application. The target application may be an application outside an application whitelist of the mobile phone. Alternatively, the target application may be an application that performs a preset operation when the mobile phone is in the screen-off state. Alternatively, the target application may be an application selected by the user in a plurality of applications. The preset operation may include at least one of playing audio, recording audio, navigation, or downloading data.

For example, power consumption optimization in this embodiment of this application may include at least one of the following power consumption optimization items: prohibiting the target application from using a mobile communication network, prohibiting the target application from using Wi-Fi, prohibiting the target application from using Bluetooth, prohibiting the target application from using a GPS, prohibiting a CPU from being invoked, enabling a flight mode, a broadcast proxy, suspending an alarm, alarm alignment, releasing a wakelock, stopping all processes of the target application, a proxy service, and a proxy job, and converting use of a RAM to use of a ROM.

In the flight mode, the mobile phone disconnects communication between a subscriber identity card SIM card of the mobile phone and a base station. In this way, the mobile phone cannot communicate with the base station, and no longer consumes power to send and receive signaling or messages, thereby reducing energy consumption per unit time of the mobile phone.

The broadcast proxy is used to trigger the mobile phone to prohibit the target application from communicating with another application. In this way, the target application cannot exchange signaling or information with another application, and energy consumption required by this behavior is saved, thereby reducing power consumption of the entire mobile phone in the Do Not Disturb mode.

Suspending an alarm is used to trigger the mobile phone to suspend a periodic wake-up action of the target application. In this way, the target application is no longer periodically waked up, and electrical energy required by wake-up signaling is no longer consumed, thereby reducing power consumption of the mobile phone in the Do Not Disturb mode.

Alarm alignment is used to trigger the mobile phone to set a wake-up period of the target application to be synchronized with a system wake-up period of the mobile phone. Because a wake-up period of an actual application is different from the system wake-up period of the mobile phone, a quantity of wake-up times of the mobile phone is relatively large. Therefore, by aligning the two wake-up periods, the quantity of wake-up times of the mobile phone can be reduced, thereby reducing power consumed by the mobile phone.

To further reduce the energy consumption of the mobile phone, when the wake-up period of the application and the system wake-up period of the system of the mobile phone are synchronized, the longer wake-up period may be used as the period after alignment. Compared with using the shorter wake-up period as the period after alignment, using the longer wake-up period may be used as the period after alignment can reduce the wake-up per unit time of the mobile phone, thereby further reducing power consumed by the mobile phone.

Releasing a wakelock of the target application is used to trigger the CPU to stop allocating a resource for the target application. In this way, the CPU of the mobile phone may no longer be locked by the wakelock of the target application for use by the target application, so that power consumption of the mobile phone by the CPU is reduced, and then power consumption of the mobile phone in the Do Not Disturb mode is reduced.

The proxy service is used to trigger the mobile phone to prevent the target device from using a service. In this way, if the target application no longer performs a service by using the resource of the mobile phone, power consumption of the service of the target application is saved, thereby reducing power consumption of the mobile phone in the Do Not Disturb mode.

The proxy job is used to trigger the mobile phone to prevent the target device from using a job. In this way, if the target application no longer performs a job by using the resource of the mobile phone, power consumption of the job of the target application is saved, thereby reducing power consumption of the mobile phone in the Do Not Disturb mode.

When the power consumption optimization is performed on the target application, at least one of the foregoing plurality of power consumption optimization items may be performed. In addition, when all the foregoing power consumption optimization items are executed by the electronic device, the target application cannot run normally, so that usage of resources in the electronic device is reduced, and power consumption of the electronic device is further reduced. Therefore, once the electronic device performs any one of the foregoing power consumption optimization items on the target application in the Do Not Disturb mode and in the screen-off state, power consumption per unit time of the target application can be reduced. Further, when the electronic device enables the Do Not Disturb mode, the user can feel that the power consumption per unit time of the electronic device decreases, thereby avoiding a sense of gap caused by the existing Do Not Disturb mode to the user, and improving user experience of the electronic device.

In an implementation, the application in the application whitelist is a preconfigured default application in the mobile phone; or the application in the application whitelist is set by the mobile phone in response to a setting operation performed by the user.

For example, the preconfigured default application may be obtained by analyzing actual usage data of a large quantity of users for the applications. The preconfigured default application may be specifically an application that needs to be frequently used by the users in the applications, for example, a social application (for example, WeChat^{®}) used by most users. By using these applications as applications in the application whitelist, the target application on which power consumption optimization is finally performed is an application that is not frequently used by the user. This ensures that an application that is frequently used or that needs to be always used by the user can still provide a service for the user even when the mobile phone is in the Do Not Disturb mode and in the screen-off state, and can reduce power consumption of the mobile phone in the Do Not Disturb mode.

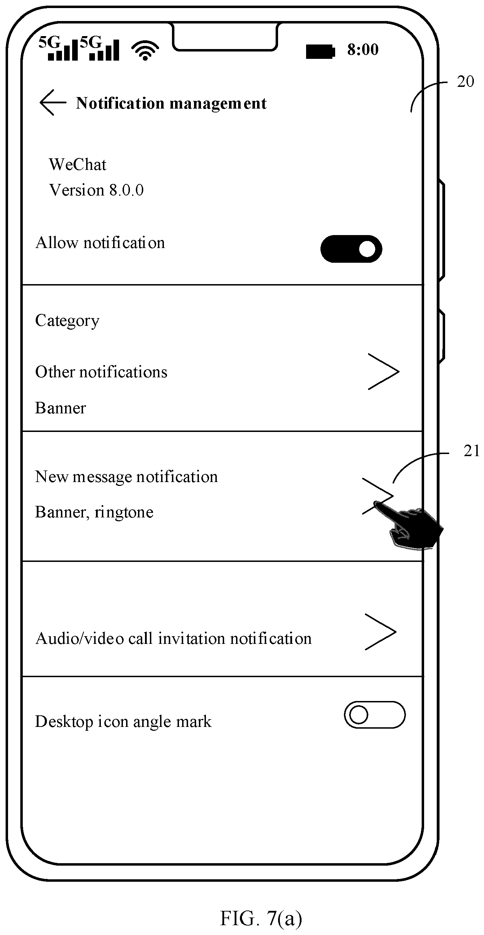

In a possible application scenario, the application in the application whitelist may be set by the mobile phone in the setting menu in response to notification management of any notification message of the user for the application. Specifically, using a new message notification of the WeChat^{®} application as an example, the mobile phone responds to an operation performed by the user on some options in the setting menu (for example, first tapping the "Notification" option in the setting menu, and then tapping the "WeChat^{®}" option on the subsequently displayed interface; for another example, first tapping the "Application" option in the setting menu, then tapping the "Application management" option on the subsequently displayed interface, then tapping "WeChat^{®}" on the subsequently displayed interface, and finally tapping "Notification management" on the subsequently displayed interface), and then can display the notification management interface 20 of WeChat^{®} shown in FIG. 7(a) in response to the operation performed by the user.

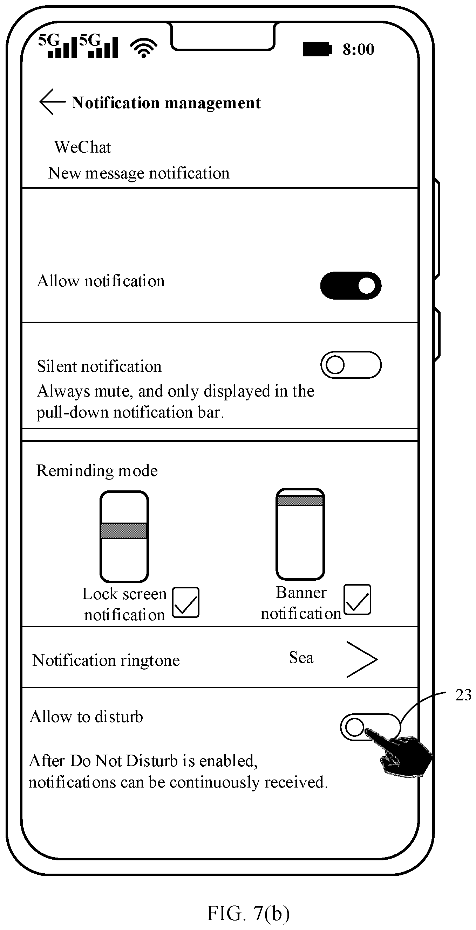

Then, the mobile phone may display the new message notification management interface 22 of WeChat^{®} shown in FIG. 7(b) in response to a tap operation performed by the user on the "new message notification" option 21. The new message notification management interface 22 of WeChat^{®} includes a third control 23 corresponding to the words "Allow to disturb". By default, the mobile phone disables "Allow to disturb", that is, the slider of the third control 23 is on the left side.

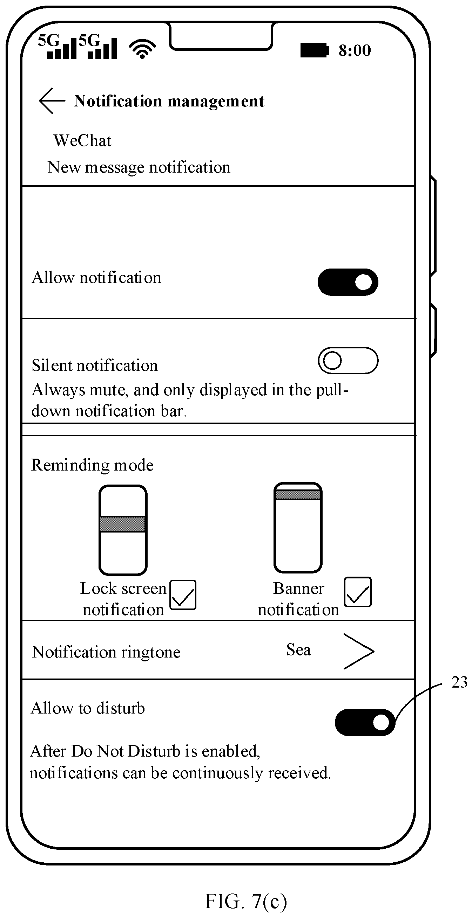

When the user needs to enable "Allow to disturb" to set the corresponding application to an application in the application whitelist, the third control 23 is taped. In this case, the mobile phone may display the interface shown in FIG. 7(c) in response to the tap operation performed by the user on the third control 23. The slider of the third control 23 on the interface has been moved to the right side, and the left area of the third control 23 is in a predetermined color (for example, blue). In this case, the mobile phone may use WeChat^{®} as an application in the application whitelist in response to a tap operation performed by the user on the third control 23 shown in FIG. 7(b).

In another possible application scenario, alternatively, after the mobile phone receives a voice instruction from the user, an application in the application whitelist may be determined by the smart assistant of the mobile phone based on content of the voice instruction. For example, when the Do Not Disturb mode is enabled, after waking up the smart assistant of the mobile phone, the user says "Do not mute the notification message of WeChat^{®}", and then the smart assistant analyzes the voice instruction and sets WeChat^{®} as an application in the application whitelist with reference to the current mode of the mobile phone. For a specific implementation process, refer to FIG. 6(a)-FIG. 6(d). Details are not described herein again.

In still another possible application scenario, alternatively, after the mobile phone receives a voice instruction from the user, an application in the application whitelist may be determined, in response to an operation performed by the user, on a setting interface that is displayed based on the voice instruction. For example, if the user has enabled the Do Not Disturb mode, the user says "Open the notification management interface" after waking up the smart assistant of the mobile phone, and then the smart assistant controls the mobile phone to display the notification management interface (for a specific implementation process, refer to FIG. 6(a)-FIG. 6(d)). Then the mobile phone may determine an application in the application whitelist in response to a related operation performed by the user on the notification management interface (for specific implementation, refer to FIG. 7(a)-FIG. 7(c)).

In this way, by enabling the user to determine the application in the application whitelist, a user requirement can be ensured, and different application whitelists and target applications can be determined according to different user requirements, thereby improving user experience.

It should be noted that, in practice, notification messages of each application fall into many types (for example, "another notification", "new message notification", and "audio/video call invitation notification" shown in FIG. 7(a)), and therefore, to improve user experience, the mobile phone displays setting options of for the user to set each type of notification message. However, when performing power consumption optimization on an application, the mobile phone cannot separately perform power consumption optimization on each type of notification message of the application. Therefore, in this application, after the user enables the "Allow to disturb" option of any type of notification message of an application, the mobile phone uses the application as an application in the application whitelist.

Specifically, all the foregoing preset operations are operations that can be clearly sensed, and the application on which a preset operation is performed is an application that is being used by the user. Therefore, to ensure normal running of the application to ensure user experience, this type of application should not be used as the target application on which power consumption optimization is to be performed.

In addition, in a feasible determining manner of the foregoing target application, the significance of the application manner selected by the user in the plurality of applications is as follows: A specific right to select the target application may be handed over to the user, so that all finally determined target applications are applications on which the user needs to perform power consumption optimization. Therefore, when the mobile phone subsequently performs power consumption optimization in the Do Not Disturb mode and in a screen-off state, target applications are applications selected by the user, thereby improving user experience of the mobile phone.

It should be noted that, in practice, a target application may be an application that meets a determining condition of any one of the foregoing several determining manners (an application outside an application whitelist of the mobile phone, an application that performs a preset operation when the mobile phone is in the screen-off state, or an application selected by the user in a plurality of applications.), an application that meets determining conditions of two determining manners, or an application that meets determining conditions of three determining manners. When an application meets the determining conditions of a plurality of determining manners, and there is a conflict between different determining conditions (for example, an application is an application that performs a preset operation and an application selected by a user), whether the application is a target application may be determined based on a preset policy (for example, a priority is set for each determining condition, and when the application meets a plurality of determining conditions, the determining condition with a higher priority prevails).

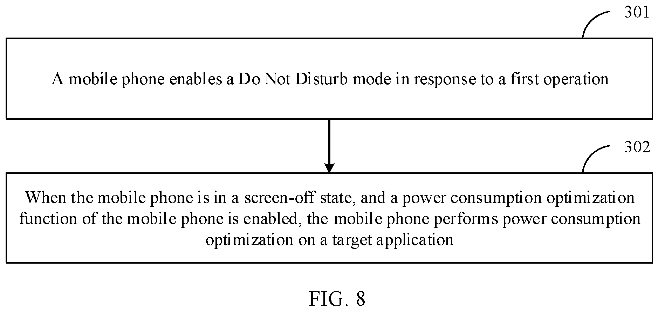

In an optional implementation, with reference to FIG. 3, referring to FIG. 8, the foregoing step 302 may be specifically as follows: When the mobile phone is in the screen-off state and the power consumption optimization function of the mobile phone is enabled, the mobile phone performs power consumption optimization on the target application.

When the mobile phone enables the Do Not Disturb mode, the power consumption optimization function is enabled in response to a turn-on operation performed by the user on a preset switch on the setting interface.

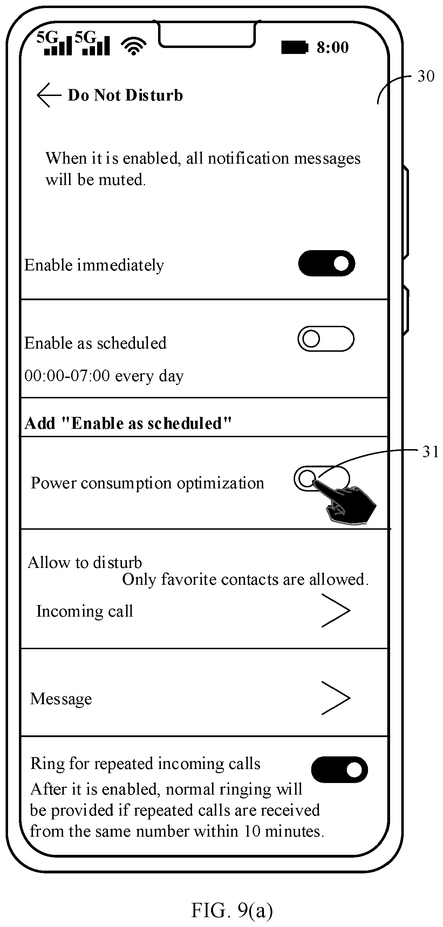

In a possible implementation scenario, referring to FIG. 9(a), the setting interface may be the Do Not Disturb setting interface 30 (for a process of opening the Do Not Disturb setting interface, refer to related descriptions in FIG. 4(a)-FIG. 4(c) to FIG. 6(a)-FIG. 6(d)), the preset switch may be the fourth control 31 corresponding to the "Power consumption optimization" option on the Do Not Disturb setting interface 30 (the mobile phone may disable power consumption optimization by default, and in this case, the slider of the fourth control 31 is on the left side), and the turn-on operation may be a tap operation performed by the user on the fourth control 31.

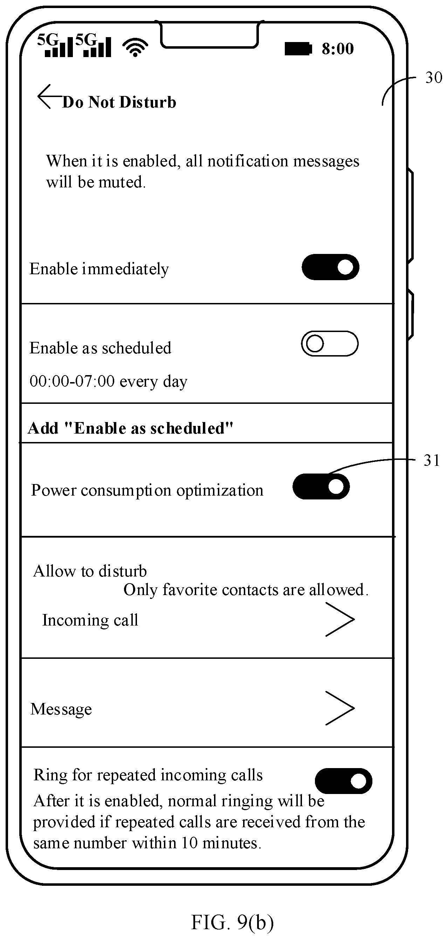

Specifically, after responding to the tap operation performed by the user on the fourth control 31, the mobile phone may display the interface shown in FIG. 9(b). On this interface, the slider of the fourth control 31 has been moved to the right side, and the left area of the fourth control 31 is in a predetermined color (for example, blue). In this case, the power consumption optimization function is enabled on the mobile phone at the same time, so that when the mobile phone is subsequently in the screen-off state, power consumption optimization is performed on the target application.

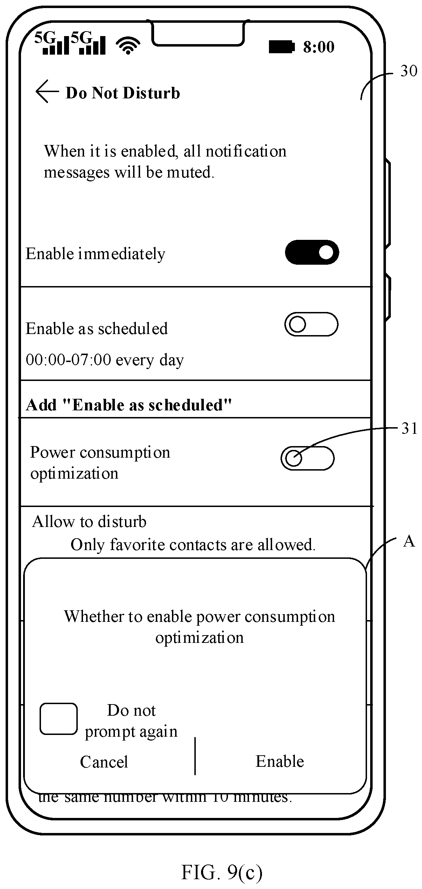

In another possible implementation scenario, when the mobile phone receives an operation performed by the user and displays the Do Not Disturb setting interface, referring to FIG. 9(c), the Do Not Disturb setting interface 30 includes a pop-up window A, where the pop-up window A includes prompt words similar to "Whether to enable power consumption optimization", and further includes two controls: "Cancel" and "Enable". After the user taps the control with the word "Cancel", the mobile phone does not enable the power consumption optimization function in response to the tap operation performed by the user. After the user taps the control with the word "Enable", the mobile phone enables the power consumption optimization function in response to the tap operation performed by the user. In this case, to enable the user to disable the power consumption optimization function enabled on the mobile phone or enable the disabled power consumption optimization function when the mobile phone has enabled the Do Not Disturb mode, the Do Not Disturb setting interface 30 may further include the "Power consumption optimization" option shown in FIG. 9(b) and the fourth control 31 corresponding to the "Power consumption optimization" option. In this way, the mobile phone may enable the power consumption optimization function or disable the power consumption optimization function in response to a tap operation performed by the user on the fourth control 31.

Certainly, in practice, the power consumption optimization function may be enabled in any other feasible manner, such as a voice instruction. This is not specifically limited in this application.

When the electronic device performs power consumption optimization on the target application in the Do Not Disturb mode and in the screen-off state, the target application cannot run normally in this case. However, in some scenarios (for example, the user enables the Do Not Disturb mode of the electronic device during a class, but an application in the electronic device still needs to run normally), the user may not need to perform power consumption optimization on the target application. Therefore, based on the foregoing technical solution, the right to determine whether to perform power consumption optimization on the target application may be handed over to the user, thereby improving user experience.

In an implementation, based on the power consumption optimization method shown in FIG. 8, in a feasible manner for determining the target application described in step 302, a specific implementation process of the application selected by the user in the plurality of applications may include S1 and S2.

S1. The mobile phone displays a first interface in response to a turn-on operation performed by the user on a preset switch, where the first interface includes optimization options of a plurality of applications.

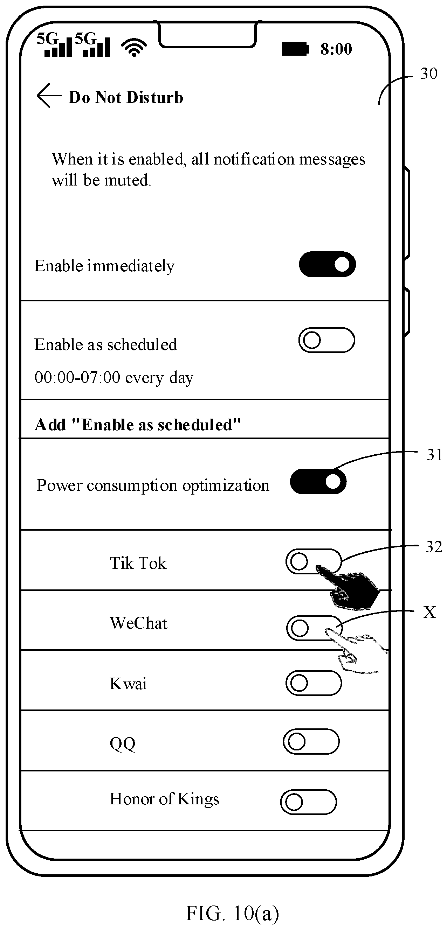

For example, based on the application scenario shown in FIG. 9(a), the mobile phone may display the interface shown in FIG. 10(a) in response to a tap operation performed by the user on the fourth control 31. On this interface, the slider of the fourth control 31 has been moved to the right side, and the left area of the fourth control 31 is in a predetermined color (for example, blue). In addition, the interface further includes names of a plurality of applications installed on the mobile phone and optimization options of all the applications. For example, in FIG. 10(a), a control whose optimization option is the same as that of the fourth control shown in FIG. 9(a)-FIG. 9(c) is used as an example. The mobile phone may set an initial state of each optimization option to off, that is, a slider of the optimization option shown in FIG. 10(a) is on the left side. In this case, the first interface is an interface shown in FIG. 10(a).

Certainly, actually, the manner of triggering the mobile phone to display the first interface may be any other feasible manner, for example, a voice instruction is used to instruct the mobile phone to open the first interface. This is not specifically limited in this application.

S2. The mobile phone uses the at least one application as the plurality of target applications in response to a selection operation performed by the user on the optimization option of the at least one application in the optimization options of the plurality of applications.

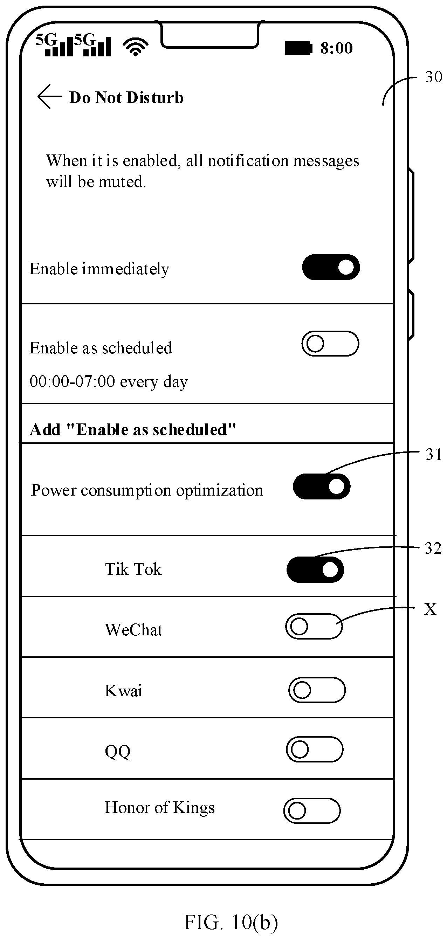

The selection operation may be a tap operation or any other feasible operation. For example, that a selection operation is a tap operation is used as an example. If the user needs to use Tik Tok^{®} as the target application on which power consumption optimization is to be performed when the mobile phone is in the Do Not Disturb mode and in the screen-off state, the user may tap the optimization option 32 of Tik Tok^{®} in FIG. 10(a). Then, the mobile phone may display the interface shown in FIG. 10(b) in response to the tap operation. On this interface, the slider of the optimization option 32 of Tik Tok^{®} has been moved to the right side, and the left area of the optimization option 32 is in a predetermined color (for example, blue). Then, when the mobile phone enables the Do Not Disturb mode and is in the screen-off state, the mobile phone uses Tik Tok^{®} as the target application, and performs power consumption optimization on Tik Tok^{®}.

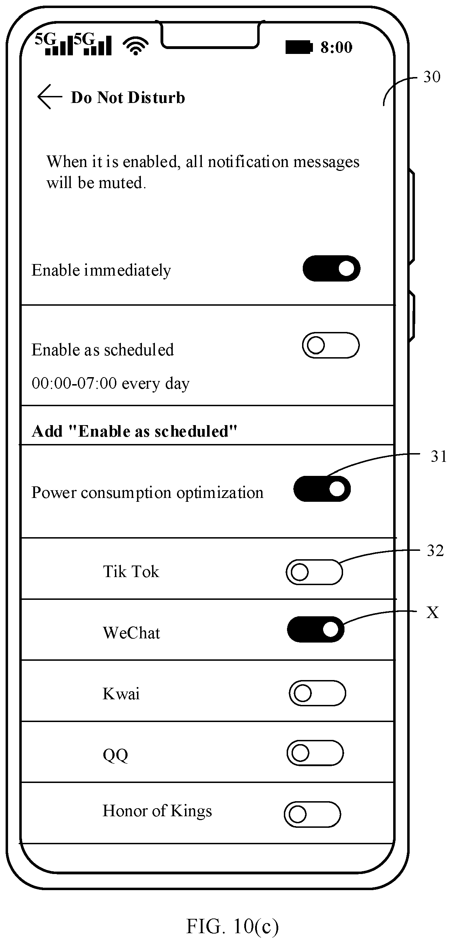

For another example, because WeChat^{®} runs in both the screen-on state and the screen-off state, to reduce energy consumption, the user also needs to perform power consumption optimization on WeChat^{®} in the Do Not Disturb mode. Specifically, the user may tap an optimization option X of WeChat^{®} in FIG. 10(a). Then, the mobile phone may display the interface shown in FIG. 10(c) in response to the tap operation. On this interface, the slider of the optimization option 33 of WeChat^{®} has been moved to the right side, and the left area of the optimization option X is in a predetermined color (for example, blue). Then, when the mobile phone enables the Do Not Disturb mode and is in the screen-off state, the mobile phone uses WeChat^{®} as the target application, and performs power consumption optimization on WeChat^{®}. For example, when the mobile phone enables the Do Not Disturb mode and is in the screen-off state, the mobile phone disconnects a connection between WeChat^{®} and a network, and does not receive a message related to WeChat^{®} (for example, a message sent by another mobile phone to the mobile phone by using WeChat^{®}). In this way, power consumption of the mobile phone by WeChat^{®} is reduced. Subsequently, when the mobile phone exits the Do Not Disturb mode or is in a screen-on state, the mobile phone may restore the connection between WeChat^{®} and the network, receive all messages in a time period in which the mobile phone is in the Do Not Disturb mode and in the screen-off state, and display the messages to the user in WeChat^{®}. In this way, energy consumption of the mobile phone in the Do Not Disturb mode can be reduced, and when the user needs to use an application, the user can see a message that needs to be seen, thereby improving user experience.

Based on the technical solution corresponding to S 1 and S2, when the mobile phone is in the Do Not Disturb mode and in the screen-off state, specific applications (target applications) on which power consumption optimization may be set by the user in a process of enabling the Do Not Disturb mode. Because this manner is equivalent to giving the user a prompt for setting the target application, user experience can be further improved.

In another implementation, based on the foregoing technical solution corresponding to S1 and S2, the power consumption optimization method may further include X1 and X2.

X1. The mobile phone displays a second interface in response to a selection operation performed by the user on the optimization option of the first application, where the second interface includes optimization options of a plurality of power consumption optimization items.

The first application is one of the plurality of applications installed on the mobile phone. For content of the plurality of power consumption optimization items, refer to related descriptions after step 302. Details are not described herein again. The selection operation can be a tap operation or any other feasible operation.

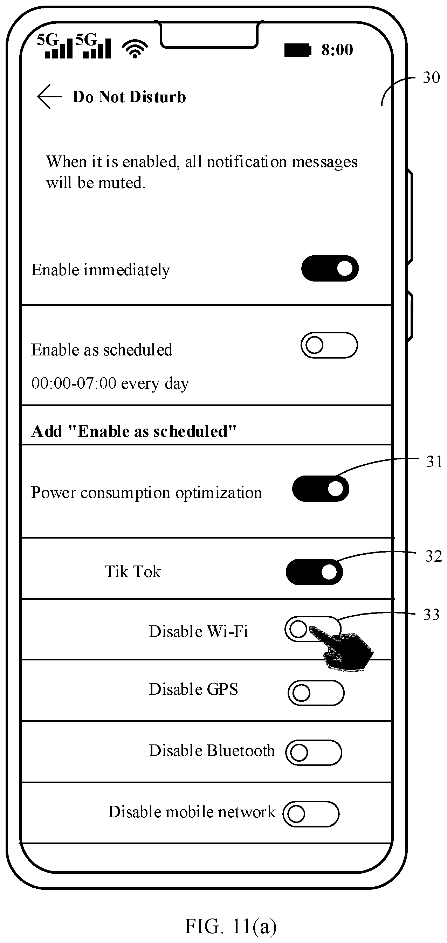

For example, based on the application scenario shown in FIG. 10(a), that the first application is Tik Tok^{®}, and the selection operation is a tap operation is used as an example, and a specific implementation process of step X1 is as follows: The mobile phone displays the second interface shown in FIG. 11(a) in response to the tap operation performed by the user on the optimization option 32 of Tik Tok^{®} shown in FIG. 10(a). The slider of the optimization option 32 of Tik Tok^{®} on the second interface has been moved to the right side, and the left area of the optimization option 32 is in a predetermined color (for example, blue). In addition, the second interface further includes optimization options of a plurality of power consumption optimization items. A style of each power consumption optimization item may be shown as the optimization option of each application in FIG. 10(a).

Certainly, actually, the manner of triggering the mobile phone to display the second interface may be any other feasible manner, for example, a voice instruction is used to instruct the mobile phone to open the second interface. This is not specifically limited in this application.

X2. The mobile phone uses the at least one power consumption optimization item as the power consumption optimization item of the target application in response to a selection operation performed by the user on the optimization option of the at least one power consumption optimization item in the optimization options of the plurality of power consumption optimization items.

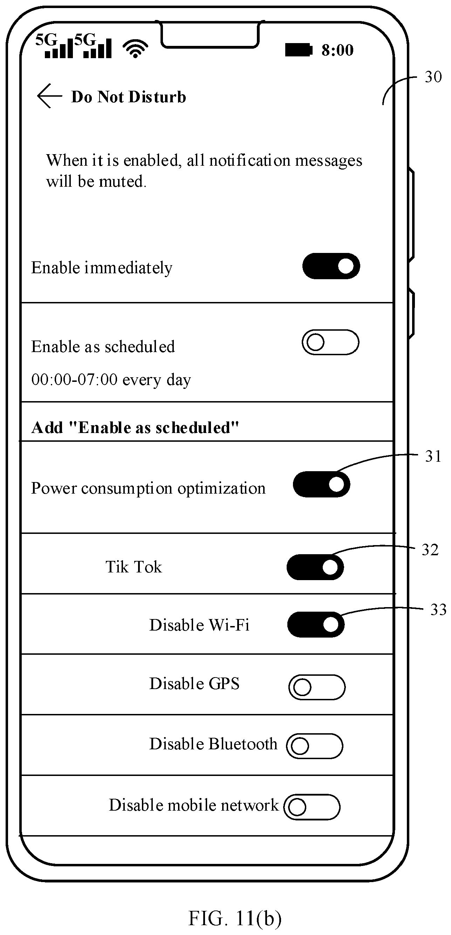

The selection operation may be a tap operation or any other feasible operation. For example, that the selection operation is a tap operation is used as an example, referring to FIG. 11(a), if the user needs to disable Wi-Fi (equivalent to prohibiting the target application from using Wi-Fi, as described above) when the mobile phone is in the Do Not Disturb mode and in the screen-off state, the user may tap the optimization option 33 for disabling Wi-Fi in FIG. 11(a). Specifically, the mobile phone may display the interface shown in FIG. 11(b) in response to the tap operation. On this interface, the slider of optimization option 33 has been moved to the right side, and the left area of optimization option 33 is in a predetermined color (for example, blue). Then, when the mobile phone enables the Do Not Disturb mode and is in the screen-off state, the mobile phone uses Tik Tok^{®} as a target application, and performs an operation of prohibiting use of Wi-Fi on Tik Tok^{®}.

Based on the foregoing solution, the user can not only determine the target application in a process of setting the Do Not Disturb mode, but also determine a power consumption optimization item corresponding to each target application after determining the target application. Therefore, when the electronic device is in the Do Not Disturb mode and in the screen-off state subsequently, differentiated power consumption optimization may be performed on each target application according to a user requirement, so as to further meet the user requirement and improve user experience.

In still another implementation, based on the power consumption optimization method shown in FIG. 8, the power consumption optimization method may further include L1 and L2.

L1. The electronic device displays a third interface in response to a turn-on operation performed by the user on a preset switch, where the third interface includes optimization options of a plurality of power consumption optimization items.

For content of the plurality of power consumption optimization items, refer to related description after step 302. Details are not described herein again. The selection operation can be a tap operation or any other feasible operation.

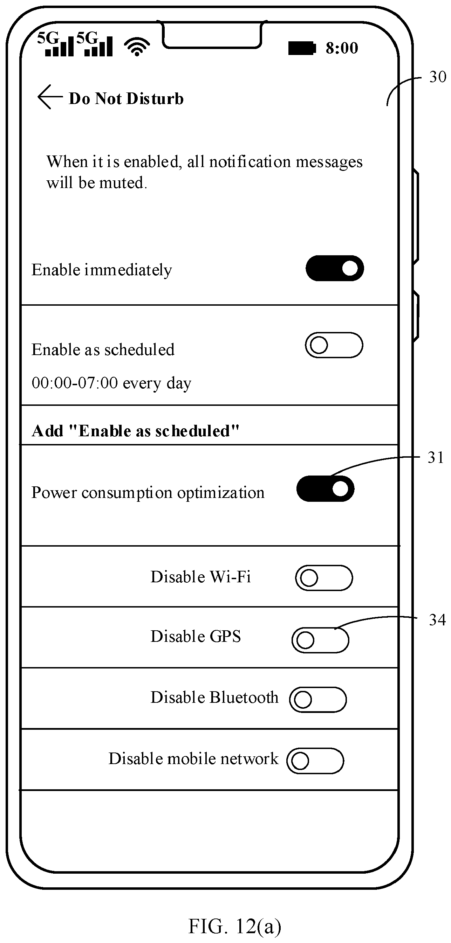

For example, based on the application scenario shown in FIG. 9(a), and that the turn-on operation is a tap operation is used as an example. The mobile phone may display the third interface shown in FIG. 12(a) in response to a tap operation performed by the user on the fourth control 31. On the third interface, the slider of the fourth control 31 has been moved to the right side, and the left area of the fourth control 31 is in a predetermined color (for example, blue). In addition, the third interface further includes optimization options of a plurality of power consumption optimization items. A style of each power consumption optimization item may be shown as the fourth control 31 in FIG. 9(a).

Certainly, actually, the manner of triggering the mobile phone to display the third interface may be any other feasible manner, for example, a voice instruction is used to instruct the mobile phone to open the third interface. This is not specifically limited in this application.

L2. The electronic device uses the at least one power consumption optimization item as the power consumption optimization item of the target application in response to a selection operation performed by the user on the optimization option of the at least one power consumption optimization item in the optimization options of the plurality of power consumption optimization items.

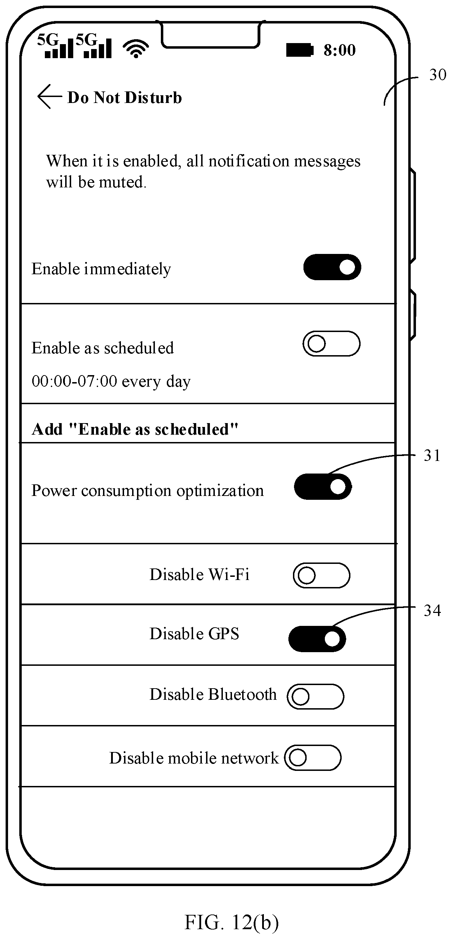

The selection operation may be a tap operation or any other feasible operation. For example, that the selection operation is a tap operation is used as an example, referring to FIG. 12(a), if the user needs to prohibit the GPS from being used as the power consumption optimization item of all the target applications (equivalent to prohibiting the target application from using the GPS, as described above) when the mobile phone is in the Do Not Disturb mode and in the screen-off state, the user may tap the optimization option 34 for disabling the GPS in FIG. 12(a). Specifically, the mobile phone displays the interface shown in FIG. 12(b) in response to the tap operation performed on the optimization option 34 in FIG. 12(a). On this interface, the slider of optimization option 34 has been moved to the right side, and the left area of optimization option 34 is in a predetermined color (for example, blue). Then, when the mobile phone enables the Do Not Disturb mode and is in the screen-off state, the mobile phone prohibits the GPS from being used as the power consumption optimization item of all the target applications, and performs power consumption optimization on all target applications.

Based on the foregoing solution corresponding to L1 and L2, the user may determine a specific power consumption optimization item in a process of setting the Do Not Disturb mode. Therefore, when the electronic device is in the Do Not Disturb mode and in the screen-off state subsequently, proper power consumption optimization may be performed on the target application according to a user requirement, so as to further meet the user requirement and improve user experience.

In a possible implementation, to ensure that when the user does not need to perform power consumption optimization on the target application, the mobile phone stops performing power consumption optimization on the target application in a timely manner, the power consumption optimization method further includes: stopping performing power consumption optimization on the target application when the mobile phone is in the screen-on state or exits the Do Not Disturb mode.

There are the following several scenarios in which the mobile phone exits the Do Not Disturb mode.

In a first possible scenario, if the user enables the Do Not Disturb mode by tapping the second control 16 "Enable as scheduled" shown in FIG. 5(b), the mobile phone enables the Do Not Disturb mode in a time period (for example, 00:00-07:00) corresponding to the second control 16, and exits the Do Not Disturb mode during another time period. In this scenario, if the mobile phone is in the screen-off state, whether to perform power consumption optimization on the target application may be determined by determining whether the current time period is the time period corresponding to the Do Not Disturb mode.

In a second possible scenario, the user may implement, by performing an operation on the Do Not Disturb setting option in the setting menu of the mobile phone, the purpose of exiting the Do Not Disturb mode of the mobile phone. A specific implementation process is similar to that in the scenario shown in FIG. 5(a)-FIG. 5(d). A difference lies in that when the user needs to enable the mobile phone to exit the Do Not Disturb mode, the user needs to re-tap the first controller 15 or the second control 16 on the interface shown in FIG. 5(c) or FIG. 5(d). Then the mobile phone moves the slider of the first control 15 or the second control 16 to the left side in response to an operation performed by the user, and restores the predetermined color (for example, white or gray) displayed before an area other than the slider of the two controls to an original color. In this case, the mobile phone exits the Do Not Disturb mode.

In a third possible scenario, when the mobile phone is in the Do Not Disturb mode, the user may further tap a control for disabling the Do Not Disturb mode in a prompt pop-up window that is in is in a pull-down menu of the mobile phone and that is used to prompt that the Do Not Disturb mode is enabled, so that the mobile phone exits the Do Not Disturb mode. Specifically, as shown in FIG. 4(c), when the mobile phone displays the pull-down menu, the mobile phone may exit the Do Not Disturb mode in response to a tap operation performed by the user on the "Close" control in the Do Not Disturb mode prompt box 12 in the pull-down menu, and the mobile phone cancels the Do Not Disturb prompt box 12 in the pull-down menu. In addition, the mobile phone may further display an interface shown in FIG. 5(c) or FIG. 5(d) in response to a tap operation performed by the user on the Do Not Disturb prompt box 12. For an implementation procedure of exiting the Do Not Disturb mode by the mobile phone, reference may be made to the foregoing second possible scenario, and details are not described herein again.

In a fourth possible scenario, the mobile phone may further accept a voice instruction of the user on a basis that the user wakes up the smart assistant of the mobile phone, so as to exit the Do Not Disturb mode. For example, the voice instruction may be "Exit Do Not Disturb mode".

In this way, the mobile phone may no longer perform power consumption optimization on the target application at an appropriate time (after exiting Do Not Disturb mode or changing to the screen-on state), so that the target application can run normally, thereby ensuring user experience of the target application.

In addition, in this application, all the manners of selecting a target application by the user may also be used by the user to determine the target application as an application other than the target application when the user does not require the mobile phone to perform power consumption optimization on the target application in the Do Not Disturb mode and in the screen-off state. Specifically, in each implementation, a selection operation performed by the user on an application is changed to a cancellation operation performed on the application. For example, the user re-taps the third control 23 shown in FIG. 7(b), so that the mobile phone moves the slider of the third control 23 to the left side. For another example, the user re-taps the optimization option of the target application (for example, Tik Tok^{®}) shown in FIG. 10(a), so that the mobile phone moves the slider of the optimization option of the target application to the left side, so that the target application is no longer used as a target application.

Based on the technical solution provided in this embodiment of this application, when the electronic device enters the Do Not Disturb mode and is in the screen-off state, power consumption optimization may be performed on a target application that meets a specific condition in the plurality of applications installed on the electronic device. The power consumption optimization can reduce usage of resources in the electronic device by the target application, and usage of a smaller quantity of resources in the electronic device by the target application leads to less actions in the electronic device and less power consumption of the electronic device. Therefore, the power consumption optimization can be performed on the target application to reduce power consumption per unit time of the electronic device in the Do Not Disturb mode. Further, when the electronic device enables the Do Not Disturb mode and the electronic device is in the screen-off state, the user can sense reduction of the power consumption per unit time of the electronic device, thereby avoiding a sense of gap caused by the existing Do Not Disturb mode to the user, and improving user experience of the electronic device. Further, the electronic device needs to consider not only whether the electronic device has enabled the Do Not Disturb mode, but also whether the electronic device is in the screen-off state. The electronic device performs power consumption optimization on the target application only when the electronic device enables the Do Not Disturb mode and is in the screen-off state. In this way, if the user still uses the target application after enabling the Do Not Disturb mode of the electronic device, the target application can be normally used when power consumption optimization is being performed, thereby ensuring user experience.

It can be understood that, to implement the foregoing functions, the foregoing device includes corresponding hardware structures and/or software modules for performing the functions. A person skilled in the art should easily realize that, with reference to the units and algorithm steps described in the embodiments disclosed in this specification, the embodiments of the present invention can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

In the embodiments of this application, the foregoing electronic device may be divided into functional modules based on the foregoing method examples. For example, each functional module may be obtained through division for a corresponding function, or two or more functions may be integrated into one processing module. The foregoing integrated module may be implemented in a form of hardware, or may be implemented in a form of a software functional module. It should be noted that module division in the embodiments of the present invention is an example, and is merely logical function division. In actual implementation, there may be another division manner.

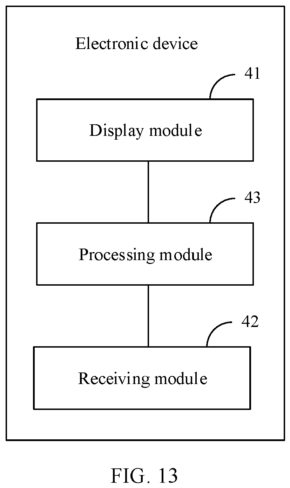

When functional modules are divided by corresponding functions, referring to FIG. 13, an embodiment of this application provides an electronic device, including a display module 41, a receiving module 42, and a processing module 43.

Specifically, the processing module 43 is configured to enable the Do Not Disturb mode in response to a first operation received by the receiving module 42. In the Do Not Disturb mode, the processing module 43 sets prompt information of notification messages of a plurality of applications to mute. When the electronic device is in a screen-off state, the processing module 43 performs power consumption optimization on a target application in the plurality of applications. The power consumption optimization is used to reduce usage of resources in of the electronic device by the target application.

The target application includes at least one of the following applications: an application outside an application whitelist of the electronic device, an application that performs a preset operation when the electronic device is in the screen-off state, or an application selected by a user in a plurality of applications. The preset operation includes at least one of playing audio, recording audio, navigation, or downloading data. For description about power consumption optimization, refer to the description about power consumption optimization after step 302 in the foregoing embodiment. Details are not described herein again.

Optionally, an application in the application whitelist is a preconfigured default application in the electronic device; or an application in the application whitelist is set by the electronic device in response to a setting operation performed by the user.

Optionally, the processing module 43 is specifically configured to: when the electronic device is in the screen-off state, and a power consumption optimization function of the electronic device is enabled, the processing module 43 performs power consumption optimization on the target application. When the electronic device enables the Do Not Disturb mode, the processing module 43 enables the power consumption optimization function in response to a turn-on operation that is performed by the user on a preset switch on the setting interface and that is received by the receiving module 42.

Optionally, the processing module 43 is specifically configured to control the display module 41 to display a first interface in response to a turn-on operation that is performed on the preset switch by the user and that is received by the receiving module 42, where the first interface includes optimization options of a plurality of applications. The processing module 43 is further configured to use the at least one application as the target application in response to a selection operation that is performed by the user on the optimization option of the at least one application in the optimization options of the plurality of applications and that is received by the receiving module 42.

Optionally, the processing module 43 is further configured to control the display module 41 to display the second interface in response to a selection operation that is performed by the user on an optimization option of the first application and that is received by the receiving module 42. The second interface includes optimization options of the plurality of power consumption optimization items; and the first application is one of the plurality of applications. The processing module 43 is further configured to select the at least one power consumption optimization item as the power consumption optimization item of the target application in response to a selection operation that is performed by the user on the optimization option of the at least one power consumption optimization item in the optimization options of the plurality of power consumption optimization items and that is received by the receiving module 42.

Optionally, the processing module 43 is further configured to display a third interface in response to a selection operation that is performed by the user on an optimization option of a preset switch and that is received by the receiving module 42, where the third interface includes optimization options of a plurality of power consumption optimization items. The processing module 43 is further configured to select the at least one power consumption optimization item as the power consumption optimization item of the target application in response to a selection operation that is performed by the user on the optimization option of the at least one power consumption optimization item in the optimization options of the plurality of power consumption optimization items and that is received by the receiving module 42.

For a specific manner in which each module of the electronic device in the foregoing embodiment performs an operation is described in detail in the embodiment of the power consumption optimization method in the foregoing embodiment, and details are not described herein again. For related beneficial effects, refer to related beneficial effects of the foregoing power consumption optimization method. Details are not described herein again.

An embodiment of this application further provides an electronic device, where the electronic device includes a display, a memory, and one or more processors. The display and the memory are coupled to the processor. The memory stores computer program code, the computer program code includes a computer instruction, and when the computer instruction is executed by the processor, the electronic device is enabled to perform the power consumption optimization method according to the foregoing embodiments. For a specific structure of the electronic device, refer to a structure of the electronic device 100 shown in FIG. 1.

Specifically, when the computer instruction is executed by the processor, the electronic device is enabled to perform the following step: enabling, by the electronic device, a Do Not Disturb mode in response to a first operation. In the Do Not Disturb mode, the electronic device sets prompt information of notification messages of a plurality of applications to mute. When the electronic device is in a screen-off state, the electronic device performs power consumption optimization on a target application in the plurality of applications. The power consumption optimization is used to reduce usage of resources in the electronic device by the target application. The target application includes at least one of the following applications: an application outside an application whitelist of the electronic device, an application that performs a preset operation when the electronic device is in the screen-off state, or an application selected by a user in a plurality of applications. The preset operation includes at least one of playing audio, recording audio, navigation, or downloading data. For a detailed description about power consumption optimization, refer to the description about power consumption optimization after step 302 in the foregoing embodiment. Details are not described herein again.

Optionally, an application in the application whitelist is a preconfigured default application in the electronic device; or an application in the application whitelist is set by the electronic device in response to a setting operation performed by the user.

Optionally, when the computer instruction is executed by the processor, the electronic device is enabled to specifically perform the following step: when the electronic device is in the screen-off state and a power consumption optimization function of the electronic device is enabled, performing, by the electronic device, power consumption optimization on the target application. When the electronic device enables the Do Not Disturb mode, the power consumption optimization function is enabled in response to a turn-on operation performed by the user on a preset switch on the setting interface.

Optionally, when the computer instruction is executed by the processor, the electronic device is enabled to specifically perform the following step: displaying, by the electronic device, a first interface in response to a turn-on operation performed by the user on a preset switch. The first interface includes optimization options of a plurality of applications. The electronic device uses the at least one application as the plurality of target applications in response to a selection operation performed by the user on the optimization option of the at least one application in the optimization options of the plurality of applications.

Optionally, when the computer instruction is executed by the processor, the electronic device is enabled to specifically perform the following step: displaying, by the electronic device, a second interface in response to a selection operation performed by the user on the optimization option of the first application. The second interface includes optimization options of a plurality of power consumption optimization items. The first application is one of the plurality of applications. The electronic device uses the at least one power consumption optimization item as the power consumption optimization item of the target application in response to a selection operation performed by the user on the optimization option of the at least one power consumption optimization item in the optimization options of the plurality of power consumption optimization items.

Optionally, when the computer instruction is executed by the processor, the electronic device is enabled to perform the following step: displaying, by the electronic device, the third interface in response to a turn-on operation performed by the user on a preset switch. The third interface includes optimization options of a plurality of power consumption optimization items. The electronic device uses the at least one power consumption optimization item as the power consumption optimization item of the target application in response to a selection operation performed by the user on the optimization option of the at least one power consumption optimization item in the optimization options of the plurality of power consumption optimization items.

An embodiment of this application further provides a computer-readable storage medium. The computer-readable storage medium includes a computer instruction. When the computer instruction is run on an electronic device, the electronic device is enabled to perform the power consumption optimization method provided in the foregoing embodiment, or the electronic device is enabled to perform functions or steps performed by the mobile phone in the foregoing embodiment.

An embodiment of this application further provides a computer program product. When the computer program product runs on a computer, the computer is enabled to perform the power consumption optimization method provided in the foregoing embodiment, or the computer is enabled to perform functions or steps performed by the mobile phone in the foregoing embodiment. The computer may be the foregoing electronic device.

The foregoing descriptions about implementations allow a person skilled in the art to clearly understand that, for the purpose of convenient and brief description, division of the foregoing functional modules is used only as an example for illustration. In actual application, the foregoing functions can be allocated to different functional modules and implemented according to needs, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes: any medium that can store program code, such as a USB flash drive, a removable hard disk, a read-only memory (read only memory, ROM), a random access memory (random access memory, RAM), a magnetic disk, or an optical disc.

## Claims

1. A power consumption optimization method, applied to an electronic device (100), wherein a plurality of applications are installed on the electronic device (100), and the method comprises:
1.1 enabling (301), by the electronic device (100), a Do Not Disturb mode in response to a first operation (10), wherein after the electronic device enables the Do Not Disturb mode, prompt information of all notification messages such as an incoming call notification, a short message notification, and an application notification are set to mute when the electronic device is in a screen-off state; and
1.2 performing (302), by the electronic device (100), power consumption optimization on a target application in the plurality of applications when the electronic device (100) is in the screen-off state, wherein the power consumption optimization is used to reduce usage of resources in the electronic device (100) by the target application;
1.3 the target application comprises at least one of the following applications: an application outside an application whitelist of the electronic device (100), an application that performs a preset operation when the electronic device (100) is in the screen-off state, or an application selected by a user in the plurality of applications; and the preset operation comprises at least one of playing audio, recording audio, navigation, or downloading data; and
1.4 wherein the power consumption optimization comprises at least one of the following power consumption optimization items: in response to a user interaction prohibiting the target application from using a mobile communication network, prohibiting the target application from using Wi-Fi, prohibiting the target application from using Bluetooth, prohibiting the target application from using a global positioning system GPS, prohibiting a central processing unit CPU from being invoked, enabling a flight mode, a broadcast proxy, alarm alignment, releasing a wakelock, stopping all processes of the target application, a proxy service, and a proxy job, and converting use of an operating memory RAM to use of a read-only memory ROM; wherein
1.5 in the flight mode, the electronic device (100) disconnects communication between a subscriber identity card SIM card of the electronic device (100) and a base station; the broadcast proxy is used to trigger the electronic device (100) to prohibit the target application from performing inter-application communication with another application; suspending an alarm is used to trigger the electronic device (100) to suspend a periodic wake-up action of the target application; alarm alignment is used to trigger the electronic device (100) to set a wake-up period of the target application to be synchronized with a system wake-up period of the electronic device (100); releasing a wakelock of the target application is used to trigger the CPU of the electronic device (100) to stop allocating a resource for the target application; and the proxy service is used to trigger the electronic device (100) to prohibit a target device from using a service; and the proxy job is used to trigger the electronic device (100) to prohibit the target device from using a job;
1.6 wherein an application in the application whitelist is a preconfigured application in the electronic device (100); or an application in the application whitelist is set by the electronic device (100) in response to a setting operation performed by the user.

2. The method according to claim 1, wherein the performing (302), by the electronic device (100), power consumption optimization on a target application in the plurality of applications when the electronic device (100) is in a screen-off state comprises:
when the electronic device (100) is in the screen-off state, and a power consumption optimization function of the electronic device (100) is enabled, performing (302), by the electronic device (100), power consumption optimization on the target application; wherein
when the electronic device (100) enables the Do Not Disturb mode, enabling the power consumption optimization function in response to a turn-on operation performed by the user on a preset switch on a setting interface (30).

3. The method according to claim 2, wherein the method further comprises:
displaying, by the electronic device (100), a first interface in response to a turn-on operation performed by the user on the preset switch, wherein the first interface comprises optimization options (32, 33, 34, X) of a plurality of applications; and
using, by the electronic device (100), the at least one application as the target application in response to a selection operation performed by the user on the optimization option of the at least one application in the optimization options (32, 33, 34, X) of the plurality of applications.

4. The method according to claim 3, wherein the method further comprises:
displaying, by the electronic device (100), a second interface in response to a selection operation performed by the user on the optimization option of the first application, wherein the second interface comprises optimization options (32, 33, 34, X) of the plurality of power consumption optimization items; and the first application is one of the plurality of applications; and
using, by the electronic device (100), the at least one power consumption optimization item as the power consumption optimization item of the target application in response to a selection operation performed by the user on the optimization option of the at least one power consumption optimization item in the optimization options (32, 33, 34, X) of the plurality of power consumption optimization items; wherein
the plurality of power consumption optimization items comprise: prohibiting the target application from using a mobile communication network, prohibiting the target application from using Wi-Fi, prohibiting the target application from using Bluetooth, prohibiting the target application from using a GPS, prohibiting a CPU from being invoked, enabling a flight mode, a broadcast proxy, suspending an alarm, alarm alignment, releasing a wakelock, stopping all processes of the target application, a proxy service, and a proxy job, and converting use of a RAM to use of a ROM; and
in the flight mode, the electronic device (100) disconnects communication between a subscriber identity card SIM card of the electronic device (100) and a base station; the broadcast proxy is used to trigger the electronic device to prohibit the target application from performing inter-application communication with another application; suspending an alarm is used to trigger the electronic device (100) to suspend a periodic wake-up action of the target application; alarm alignment is used to trigger the electronic device (100) to set a wake-up period of the target application to be synchronized with a system wake-up period of the electronic device (100); releasing a wakelock of the target application is used to trigger the CPU to stop allocating a resource for the target application; and the proxy service is used to trigger the electronic device (100) to prohibit a target device from using a service; and the proxy job is used to trigger the electronic device (100) to prohibit the target device from using a job.

5. The method according to claim 2, wherein the method further comprises:
displaying, by the electronic device (100), a third interface in response to a turn-on operation performed by the user on the preset switch, wherein the third interface comprises optimization options (32, 33, 34, X) of a plurality of power consumption optimization items; and
using, by the electronic device (100), the at least one power consumption optimization item as the power consumption optimization item of the target application in response to a selection operation performed by the user on the optimization option of the at least one power consumption optimization item in the optimization options (32, 33, 34, X) of the plurality of power consumption optimization items; wherein
the plurality of power consumption optimization items comprise: prohibiting the target application from using a mobile communication network, prohibiting the target application from using Wi-Fi, prohibiting the target application from using Bluetooth, prohibiting the target application from using a GPS, prohibiting a central processing unit CPU from being invoked, enabling a flight mode, a broadcast proxy, suspending an alarm, alarm alignment, releasing a wakelock, stopping all processes of the target application, a proxy service, and a proxy job, and converting use of a RAM to use of a ROM; and
in the flight mode, the electronic device (100) disconnects communication between a subscriber identity card SIM card of the electronic device (100) and a base station; the broadcast proxy is used to trigger the electronic device (100) to prohibit the target application from performing inter-application communication with another application; suspending an alarm is used to trigger the electronic device (100) to suspend a periodic wake-up action of the target application; alarm alignment is used to trigger the electronic device (100) to set a wake-up period of the target application to be synchronized with a system wake-up period of the electronic device (100); releasing a wakelock of the target application is used to trigger the CPU to stop allocating a resource for the target application; and the proxy service is used to trigger the electronic device (100) to prohibit a target device from using a service; and the proxy job is used to trigger the electronic device (100) to prohibit the target device from using a job.

6. An electronic device (100), comprising a display (194), a memory (121), and one or more processors (110), wherein the display (194) and the memory (121) are coupled to the processor (110); and the memory (121) stores computer program code, the computer program code comprises a computer instruction, and when the computer instruction is executed by the processor (110), the electronic device (100) is enabled to perform the power consumption optimization method according to any one of claims 1 to 5.

7. A computer-readable storage medium, wherein the computer-readable storage medium comprises an instruction, and when the instruction is run on an electronic device (100), the electronic device (100) is enabled to perform the method according to any one of claims 1 to 5.

## Patentansprüche

1. Leistungsverbrauchsoptimierungsverfahren, das auf eine elektronische Vorrichtung (100) angewendet wird, wobei eine Vielzahl von Anwendungen auf der elektronischen Vorrichtung (100) installiert ist, und das Verfahren umfasst:
1.1 Aktivieren (301) eines Anrufschutzmodus durch die elektronische Vorrichtung (100) als Reaktion auf einen ersten Vorgang (10), wobei, nachdem die elektronische Vorrichtung den Anrufschutzmodus aktiviert hat, Eingabeaufforderungsinformationen aller Benachrichtigungsnachrichten, wie eine Benachrichtigung über einen eingehenden Anruf, eine Benachrichtigung über eine Kurznachricht und eine Anwendungsbenachrichtigung, stummgestellt werden, wenn die elektronische Vorrichtung in einem Zustand mit ausgeschaltetem Bildschirm ist; und
1.2 Durchführen (302) einer Leistungsverbrauchsoptimierung an einer Zielanwendung in der Vielzahl von Anwendungen durch die elektronische Vorrichtung (100), wenn die elektronische Vorrichtung (100) in dem Zustand mit ausgeschaltetem Bildschirm ist, wobei die Leistungsverbrauchsoptimierung verwendet wird, um eine Verwendung von Ressourcen in der elektronischen Vorrichtung (100) durch die Zielanwendung zu reduzieren;
1.3 wobei die Zielanwendung mindestens eine der folgenden Anwendungen umfasst: eine Anwendung außerhalb einer Anwendungs-Whitelist der elektronischen Vorrichtung (100), eine Anwendung, die einen voreingestellten Vorgang durchführt, wenn die elektronische Vorrichtung (100) in dem Zustand mit ausgeschaltetem Bildschirm ist, oder eine Anwendung, die durch einen Benutzer aus der Vielzahl von Anwendungen ausgewählt wird; und der voreingestellte Vorgang mindestens eines von Wiedergeben von Audio, Aufnehmen von Audio, Navigation oder Herunterladen von Daten umfasst; und
1.4 wobei die Leistungsverbrauchsoptimierung mindestens eines der folgenden Leistungsverbrauchsoptimierungselemente umfasst: als Reaktion auf eine Benutzerinteraktion, Verbieten, dass die Zielanwendung ein Mobilfunknetz verwendet, Verbieten, dass die Zielanwendung Wi-Fi verwendet, Verbieten, dass die Zielanwendung Bluetooth verwendet, Verbieten, dass die Zielanwendung ein globales Positionierungssystem GPS verwendet, Verbieten, dass eine Zentraleinheit CPU aufgerufen wird, Aktivieren eines Flugmodus, ein Broadcast-Proxy, Alarmausrichtung, Aufheben eines Wakelocks, Stoppen aller Prozesse der Zielanwendung, einen Proxy-Dienst und einen Proxy-Job und Umwandeln der Verwendung eines Betriebsspeichers RAM in die Verwendung eines Lesespeichers ROM; wobei
1.5 in dem Flugmodus die elektronische Vorrichtung (100) eine Kommunikation zwischen einer Teilnehmeridentitätskarte SIM-Karte der elektronischen Vorrichtung (100) und einer Basisstation trennt; der Broadcast-Proxy verwendet wird, um die elektronische Vorrichtung (100) zu veranlassen, zu verbieten, dass die Zielanwendung eine Zwischenanwendungskommunikation mit einer anderen Anwendung durchführt;
ein Aussetzen eines Alarms verwendet wird, um die elektronische Vorrichtung (100) zu veranlassen, eine periodische Weckaktion der Zielanwendung auszusetzen; die Alarmausrichtung verwendet wird, um die elektronische Vorrichtung (100) zu veranlassen, eine Weckzeit der Zielanwendung einzustellen, die mit einer Systemweckzeit der elektronischen Vorrichtung (100) synchronisiert werden soll; ein Aufheben eines Wakelocks der Zielanwendung verwendet wird, um die CPU der elektronischen Vorrichtung (100) zu veranlassen, ein Zuweisen einer Ressource für die Zielanwendung zu stoppen; und der Proxy-Dienst verwendet wird, um die elektronische Vorrichtung (100) zu veranlassen, zu verhindern, dass eine Zielvorrichtung einen Dienst verwendet; und der Proxy-Job verwendet wird, um die elektronische Vorrichtung (100) zu veranlassen, zu verbieten, dass die Zielvorrichtung einen Job verwendet;
1.6 wobei eine Anwendung in der Anwendungs-Whitelist eine vorkonfigurierte Anwendung in der elektronischen Vorrichtung (100) ist; oder eine Anwendung in der Anwendungs-Whitelist durch die elektronische Vorrichtung (100) als Reaktion auf einen Einstellungsvorgang eingestellt wird, der durch den Benutzer durchgeführt wird.

2. Verfahren nach Anspruch 1, wobei das Durchführen (302) der Leistungsverbrauchsoptimierung an einer Zielanwendung in der Vielzahl von Anwendungen durch die elektronische Vorrichtung (100), wenn die elektronische Vorrichtung (100) in einem Zustand mit ausgeschaltetem Bildschirm ist, umfasst:
wenn die elektronische Vorrichtung (100) in dem Zustand mit ausgeschaltetem Bildschirm ist und eine Leistungsverbrauchsoptimierungsfunktion der elektronischen Vorrichtung (100) aktiviert ist, Durchführen (302) der Leistungsverbrauchsoptimierung an der Zielanwendung durch die elektronische Vorrichtung (100); wobei
wenn die elektronische Vorrichtung (100) den Anrufschutzmodus aktiviert, Aktivieren der Leistungsverbrauchsoptimierungsfunktion als Reaktion auf einen Einschaltvorgang, der durch den Benutzer an einem voreingestellten Schalter auf einer Einstellungsschnittstelle (30) durchgeführt wird.

3. Verfahren nach Anspruch 2, wobei das Verfahren ferner umfasst:
Anzeigen einer ersten Schnittstelle durch die elektronische Vorrichtung (100) als Reaktion auf einen Einschaltvorgang, der durch den Benutzer an dem voreingestellten Schalter durchgeführt wird, wobei die erste Schnittstelle Optimierungsoptionen (32, 33, 34, X) einer Vielzahl von Anwendungen umfasst; und
Verwenden der mindestens einen Anwendung als die Zielanwendung durch die elektronische Vorrichtung (100) als Reaktion auf einen Auswahlvorgang, der durch den Benutzer an der Optimierungsoption der mindestens einen Anwendung in den Optimierungsoptionen (32, 33, 34, X) der Vielzahl von Anwendungen durchgeführt wird.

4. Verfahren nach Anspruch 3, wobei das Verfahren ferner umfasst:
Anzeigen einer zweiten Schnittstelle durch die elektronische Vorrichtung (100) als Reaktion auf einen Auswahlvorgang, der durch den Benutzer an der Optimierungsoption der ersten Anwendung durchgeführt wird, wobei die zweite Schnittstelle Optimierungsoptionen (32, 33, 34, X) der Vielzahl von Leistungsverbrauchsoptimierungselementen umfasst; und die erste Anwendung eine der Vielzahl von Anwendungen ist; und
Verwenden des mindestens einen Leistungsverbrauchsoptimierungselements als das Leistungsverbrauchsoptimierungselement der Zielanwendung durch die elektronische Vorrichtung (100) als Reaktion auf einen Auswahlvorgang, der durch den Benutzer an der Optimierungsoption des mindestens einen Leistungsverbrauchsoptimierungselements in den Optimierungsoptionen (32, 33, 34, X) der Vielzahl von Leistungsverbrauchsoptimierungselementen durchgeführt wird; wobei
die Vielzahl von Leistungsverbrauchsoptimierungselementen umfasst: Verbieten, dass die Zielanwendung ein Mobilfunknetz verwendet, Verbieten, dass die Zielanwendung Wi-Fi verwendet, Verbieten, dass die Zielanwendung Bluetooth verwendet, Verbieten, dass die Zielanwendung ein GPS verwendet, Verbieten, dass eine CPU aufgerufen wird, Aktivieren eines Flugmodus, ein Broadcast-Proxy, Aussetzen eines Alarms, Alarmausrichtung, Aufheben eines Wakelocks, Stoppen aller Prozesse der Zielanwendung, einen Proxy-Dienst und einen Proxy-Job und Umwandeln der Verwendung eines RAM in die Verwendung eines ROM; und
in dem Flugmodus die elektronische Vorrichtung (100) eine Kommunikation zwischen einer Teilnehmeridentitätskarte, SIM-Karte, der elektronischen Vorrichtung (100) und einer Basisstation trennt; der Broadcast-Proxy verwendet wird, um die elektronische Vorrichtung zu veranlassen, zu verbieten, dass die Zielanwendung eine Zwischenanwendungskommunikation mit einer anderen Anwendung durchführt; das Aussetzen eines Alarms verwendet wird, um die elektronische Vorrichtung (100) zu veranlassen, eine periodische Weckaktion der Zielanwendung auszusetzen; die Alarmausrichtung verwendet wird, um die elektronische Vorrichtung (100) zu veranlassen, eine Weckzeit der Zielanwendung einzustellen, die mit einer Systemweckzeit der elektronischen Vorrichtung (100) synchronisiert werden soll; das Aufheben eines Wakelocks der Zielanwendung verwendet wird, um die CPU zu veranlassen, das Zuweisen einer Ressource für die Zielanwendung zu stoppen; und der Proxy-Dienst verwendet wird, um die elektronische Vorrichtung (100) zu veranlassen, zu verhindern, dass eine Zielvorrichtung einen Dienst verwendet; und der Proxy-Job verwendet wird, um die elektronische Vorrichtung (100) zu veranlassen, zu verbieten, dass die Zielvorrichtung einen Job verwendet.

5. Verfahren nach Anspruch 2, wobei das Verfahren ferner umfasst: Anzeigen einer dritten Schnittstelle durch die elektronische Vorrichtung (100) als Reaktion auf einen Einschaltvorgang, der durch den Benutzer an dem voreingestellten Schalter durchgeführt wird, wobei die dritte Schnittstelle Optimierungsoptionen (32, 33, 34, X) einer Vielzahl von Leistungsverbrauchsoptimierungselementen umfasst; und
Verwenden des mindestens einen Leistungsverbrauchsoptimierungselements als das Leistungsverbrauchsoptimierungselement der Zielanwendung durch die elektronische Vorrichtung (100) als Reaktion auf einen Auswahlvorgang, der durch den Benutzer an der Optimierungsoption des mindestens einen Leistungsverbrauchsoptimierungselements in den Optimierungsoptionen (32, 33, 34, X) der Vielzahl von Leistungsverbrauchsoptimierungselementen durchgeführt wird; wobei
die Vielzahl von Leistungsverbrauchsoptimierungselementen umfasst: Verbieten, dass die Zielanwendung ein Mobilfunknetz verwendet, Verbieten, dass die Zielanwendung Wi-Fi verwendet, Verbieten, dass die Zielanwendung Bluetooth verwendet, Verbieten, dass die Zielanwendung ein GPS verwendet, Verbieten, dass eine Zentraleinheit CPU aufgerufen wird, Aktivieren eines Flugmodus, ein Broadcast-Proxy, Aussetzen eines Alarms, Alarmausrichtung, Aufheben eines Wakelocks, Stoppen aller Prozesse der Zielanwendung, eines Proxy-Dienstes und eines Proxy-Jobs und Umwandeln der Verwendung eines RAM in die Verwendung eines ROM; und
in dem Flugmodus die elektronische Vorrichtung (100) eine Kommunikation zwischen einer Teilnehmeridentitätskarte, SIM-Karte, der elektronischen Vorrichtung (100) und einer Basisstation trennt; der Broadcast-Proxy verwendet wird, um die elektronische Vorrichtung (100) zu veranlassen, zu verbieten, dass die Zielanwendung eine Zwischenanwendungskommunikation mit einer anderen Anwendung durchführt; das Aussetzen eines Alarms verwendet wird, um die elektronische Vorrichtung (100) zu veranlassen, eine periodische Weckaktion der Zielanwendung auszusetzen; die Alarmausrichtung verwendet wird, um die elektronische Vorrichtung (100) zu veranlassen, eine Weckzeit der Zielanwendung einzustellen, die mit einer Systemweckzeit der elektronischen Vorrichtung (100) synchronisiert werden soll; das Aufheben eines Wakelocks der Zielanwendung verwendet wird, um die CPU zu veranlassen, das Zuweisen einer Ressource für die Zielanwendung zu stoppen; und der Proxy-Dienst verwendet wird, um die elektronische Vorrichtung (100) zu veranlassen, zu verhindern, dass eine Zielvorrichtung einen Dienst verwendet; und der Proxy-Job verwendet wird, um die elektronische Vorrichtung (100) zu veranlassen, zu verbieten, dass die Zielvorrichtung einen Job verwendet.

6. Elektronische Vorrichtung (100), umfassend eine Anzeige (194), einen Speicher (121) und einen oder mehrere Prozessoren (110), wobei die Anzeige (194) und der Speicher (121) mit dem Prozessor (110) gekoppelt sind; und der Speicher (121) Computerprogrammcode speichert, der Computerprogrammcode eine Computeranweisung umfasst, und wenn die Computeranweisung durch den Prozessor (110) ausgeführt wird, die elektronische Vorrichtung (100) aktiviert wird, um das Leistungsverbrauchsoptimierungsverfahren nach einem der Ansprüche 1 bis 5 durchzuführen.

7. Computerlesbares Speichermedium, wobei das computerlesbare Speichermedium eine Anweisung umfasst, und, wenn die Anweisung auf einer elektronischen Vorrichtung (100) vorgenommen wird, die elektronische Vorrichtung (100) aktiviert ist, um das Verfahren nach einem der Ansprüche 1 bis 5 durchzuführen.

## Revendications

1. Procédé d'optimisation de consommation d'énergie, appliqué à un dispositif électronique (100), dans lequel une pluralité d'applications sont installées sur le dispositif électronique (100), et le procédé comprend :
1.1 l'activation (301), par le dispositif électronique (100), d'un mode Ne pas déranger en réponse à une première opération (10), dans lequel une fois que le dispositif électronique a activé le mode Ne pas déranger, des informations d'invite de tous les messages de notification tels qu'une notification d'appel entrant, une notification de message court, et une notification d'application sont mises en sourdine lorsque le dispositif électronique est dans un état d'écran éteint ; et
1.2 l'exécution (302), par le dispositif électronique (100), d'une optimisation de consommation d'énergie sur une application cible dans la pluralité d'applications lorsque le dispositif électronique (100) est dans l'état d'écran éteint, dans lequel l'optimisation de consommation d'énergie est utilisée pour réduire l'utilisation de ressources dans le dispositif électronique (100) par l'application cible ;
1.3 l'application cible comprend au moins l'une des applications suivantes : une application qui ne figure pas dans la liste blanche des applications du dispositif électronique (100), une application qui réalise une opération prédéfinie lorsque le dispositif électronique (100) est dans l'état d'écran éteint, ou une application choisie par un utilisateur dans la pluralité d'applications ; et l'opération prédéfinie comprend au moins l'un d'une lecture audio, d'un enregistrement audio, d'une navigation, ou d'un téléchargement de données ; et
1.4 dans lequel l'optimisation de consommation d'énergie comprend au moins l'un des éléments d'optimisation de consommation d'énergie suivants : en réponse à une interaction utilisateur, interdire à l'application cible d'utiliser un réseau de communication mobile, interdire à l'application cible d'utiliser le Wi-Fi, interdire à l'application cible d'utiliser le Bluetooth, interdire à l'application cible d'utiliser un système de positionnement mondial GPS, interdire à l'unité centrale UC d'être invoquée, activer un mode avion, un proxy de diffusion, un alignement d'alarme, libérer un verrou de veille, arrêter tous les processus de l'application cible, un service proxy, et une tâche proxy, et convertir l'utilisation d'une mémoire vive d'exploitation RAM pour utiliser une mémoire morte ROM ; dans lequel
1.5 en mode avion, le dispositif électronique (100) coupe la communication entre une carte d'identification d'abonné, carte SIM, du dispositif électronique (100) et une station de base ; le
proxy de diffusion est utilisé pour déclencher le dispositif électronique (100) pour interdire à l'application cible de réaliser une communication interapplications avec une autre application ; la suspension d'une alarme est utilisée pour déclencher le dispositif électronique (100) pour suspendre une action de réveil périodique de l'application cible ; l'alignement d'alarme est utilisé pour déclencher le dispositif électronique (100) pour définir une période de réveil de l'application cible à synchroniser avec une période de réveil système du dispositif électronique (100) ; la libération d'un verrou de veille de l'application cible est utilisée pour déclencher l'arrêt d'attribution d'une ressource pour l'application cible par l'UC du dispositif électronique (100) ; et le service proxy est utilisé pour déclencher le dispositif électronique (100) pour interdire à un dispositif cible d'utiliser un service ; et la tâche proxy est utilisée pour déclencher le dispositif électronique (100) pour empêcher le dispositif cible d'utiliser une tâche ;
1.6 dans lequel une application de la liste blanche d'applications est une application préconfigurée dans le dispositif électronique (100) ; ou une application de la liste blanche d'applications est définie par le dispositif électronique (100) en réponse à une opération de réglage réalisée par l'utilisateur.

2. Procédé selon la revendication 1, dans lequel la réalisation (302), par le dispositif électronique (100), d'une optimisation de consommation d'énergie sur une application cible de la pluralité d'applications lorsque le dispositif électronique (100) est dans un état d'écran éteint comprend :
lorsque le dispositif électronique (100) est dans l'état d'écran éteint, et qu'une fonction d'optimisation de consommation d'énergie du dispositif électronique (100) est activée, la réalisation (302), par le dispositif électronique (100), d'une optimisation de consommation d'énergie sur l'application cible ; dans lequel
lorsque le dispositif électronique (100) active le mode Ne pas déranger, l'activation de la fonction d'optimisation de consommation d'énergie en réponse à une opération de mise en marche réalisée par l'utilisateur sur un interrupteur prédéfini sur une interface de réglage (30).

3. Procédé selon la revendication 2, dans lequel le procédé comprend en outre :
l'affichage, par le dispositif électronique (100), d'une première interface en réponse à une opération de mise en marche réalisée par l'utilisateur sur l'interrupteur préréglé, dans lequel la première interface comprenant des options d'optimisation (32, 33, 34, X) d'une pluralité d'applications ; et
l'utilisation, par le dispositif électronique (100), de l'au moins une application en guise d'application cible en réponse à une opération de sélection réalisée par l'utilisateur sur l'option d'optimisation de l'au moins une application dans les options d'optimisation (32, 33, 34, X) de la pluralité d'applications.

4. Procédé selon la revendication 3, dans lequel le procédé comprend en outre :
l'affichage, par le dispositif électronique (100), d'une deuxième interface en réponse à une opération de sélection réalisée par l'utilisateur sur l'option d'optimisation de la première application, dans lequel la deuxième interface comprend des options d'optimisation (32, 33, 34, X) de la pluralité d'éléments d'optimisation de consommation d'énergie ; et la première application est l'une de la pluralité d'applications ; et
l'utilisation, par le dispositif électronique (100), de l'au moins un élément d'optimisation de consommation d'énergie en guise d'élément d'optimisation de consommation d'énergie de l'application cible en réponse à une opération de sélection réalisée par l'utilisateur sur l'option d'optimisation de l'au moins un élément d'optimisation de consommation d'énergie dans les options d'optimisation (32, 33, 34, X) de la pluralité d'éléments d'optimisation de consommation d'énergie ; dans lequel
la pluralité d'éléments d'optimisation de consommation d'énergie comprend : interdire à l'application cible d'utiliser un réseau de communication mobile, interdire à l'application cible d'utiliser le Wi-Fi, interdire à l'application cible d'utiliser le Bluetooth, interdire à l'application cible d'utiliser un GPS, interdire à une UC d'être invoquée, activer un mode avion, un proxy de diffusion, suspendre une alarme, un alignement d'alarme, libérer un verrou de veille, arrêter tous les processus de l'application cible, un service proxy, et une tâche proxy, et convertir l'utilisation d'une RAM pour utiliser une ROM ; et
en mode avion, le dispositif électronique (100) coupe la communication entre une carte d'identification d'abonné, carte SIM, du dispositif électronique (100) et une station de base ; le proxy de diffusion est utilisé pour déclencher le dispositif électronique pour interdire à l'application cible de réaliser une communication interapplications avec une autre application ; la suspension d'une alarme est utilisée pour déclencher le dispositif électronique (100) pour suspendre une action de réveil périodique de l'application cible ; l'alignement d'alarme est utilisé pour déclencher le dispositif électronique (100) pour définir une période de réveil de l'application cible à synchroniser avec une période de réveil système du dispositif électronique (100) ; la libération d'un verrou de veille de l'application cible est utilisée pour déclencher l'arrêt d'attribution d'une ressource pour l'application cible par l'UC ; et le service proxy est utilisé pour déclencher le dispositif électronique (100) pour interdire à un dispositif cible d'utiliser un service ; et la tâche proxy est utilisée pour déclencher le dispositif électronique (100) pour interdire au dispositif cible d'utiliser une tâche.

5. Procédé selon la revendication 2, dans lequel le procédé comprend en outre : l'affichage, par le dispositif électronique (100), d'une troisième interface en réponse à une opération de mise en marche réalisée par l'utilisateur sur l'interrupteur préréglé, dans lequel la troisième interface comprend des options d'optimisation (32, 33, 34, X) d'une pluralité d'éléments d'optimisation de consommation d'énergie ; et
l'utilisation, par le dispositif électronique (100), de l'au moins un élément d'optimisation de consommation d'énergie en guise d'élément d'optimisation de consommation d'énergie de l'application cible en réponse à une opération de sélection réalisée par l'utilisateur sur l'option d'optimisation de l'au moins un élément d'optimisation de consommation d'énergie dans les options d'optimisation (32, 33, 34, X) de la pluralité d'éléments d'optimisation de consommation d'énergie ; dans lequel
la pluralité d'éléments d'optimisation de consommation d'énergie comprend : interdire à l'application cible d'utiliser un réseau de communication mobile, interdire à l'application cible d'utiliser le Wi-Fi, interdire à l'application cible d'utiliser le Bluetooth, interdire à l'application cible d'utiliser un GPS, interdire à une unité centrale UC d'être invoquée, activer un mode avion, un proxy de diffusion, suspendre une alarme, un alignement d'alarme, libérer un verrou de veille, arrêter tous les processus de l'application cible, un service proxy, et une tâche proxy, et convertir l'utilisation d'une RAM pour utiliser une ROM ; et
en mode avion, le dispositif électronique (100) coupe la communication entre une carte d'identification d'abonné, carte SIM, du dispositif électronique (100) et une station de base ; le proxy de diffusion est utilisé pour déclencher le dispositif électronique (100) pour interdire à l'application cible de réaliser une communication interapplications avec une autre application ; la suspension d'une alarme est utilisée pour déclencher le dispositif électronique (100) pour suspendre une action de réveil périodique de l'application cible ; l'alignement d'alarme est utilisé pour déclencher le dispositif électronique (100) pour définir une période de réveil de l'application cible à synchroniser avec une période de réveil système du dispositif électronique (100) ; la libération d'un verrou de veille de l'application cible est utilisée pour déclencher l'arrêt d'attribution d'une ressource pour l'application cible par l'UC ; et le service proxy est utilisé pour déclencher le dispositif électronique (100) pour interdire à un dispositif cible d'utiliser un service ; et la tâche proxy est utilisée pour déclencher le dispositif électronique (100) pour interdire au dispositif cible d'utiliser une tâche.

6. Dispositif électronique (100) comprenant un affichage (194), une mémoire (121), et un ou plusieurs processeurs (110), dans lequel l'affichage (194) et la mémoire (121) sont couplés au processeur (110) ; et la mémoire (121) stocke un code de programme informatique, le code de programme informatique comprend une instruction informatique, et lorsque l'instruction informatique est exécutée par le processeur (110), le dispositif électronique (100) est activé pour réaliser le procédé d'optimisation de consommation d'énergie selon l'une quelconque des revendications 1 à 5.

7. Support de stockage lisible par ordinateur, dans lequel le support de stockage lisible par ordinateur comprend une instruction, et lorsque l'instruction est exécutée sur un dispositif électronique (100), le dispositif électronique (100) est activé pour réaliser le procédé selon l'une quelconque des revendications 1 à 5.
